# EUROPEAN PATENT SPECIFICATION

(11) **EP 3 045 506 B1**
(45) Date of publication and mention of the grant of the patent: **04.03.2020**
(21) Application number: 16151055.7
(22) Date of filing: 13.01.2016
(51) Int. Cl.: C09D 4/06

(54) **ACTINIC ENERGY RADIATION-CURABLE ACRYLIC SILICONE RESIN COMPOSITION AND COATED ARTICLE**
AKTINISCHE ENERGIESTRAHLUNGSHÄRTBARE ACRYLISCHE SILIKONHARZZUSAMMENSETZUNG UND BESCHICHTETER ARTIKEL
COMPOSITION DE RÉSINE DE SILICONE ACRYLIQUE DURCISSABLE PAR RAYONNEMENT D'ÉNERGIE ACTINIQUE ET ARTICLE REVÊTU

(30) Priority: 19.01.2015 JP 2015007595
(43) Date of publication of application: 20.07.2016
(73) Proprietor: Shin-Etsu Chemical Co., Ltd., Chiyoda-ku Tokyo (JP)
(72) Inventor: MASUDA, Kohei, Annaka-shi Gunma-ken (JP); HIGUCHI, Koichi, Annaka-shi Gunma-ken (JP)
(74) Representative: Mewburn Ellis LLP

(56) References cited:
- US-A1- 2004 087 711
- US-A1- 2008 096 029
- US-A1- 2011 034 620
- US-A1- 2012 059 080
- US-A1- 2014 023 855

## Description

### TECHNICAL FIELD

This invention relates to a radiation-curable acrylic silicone resin composition and a coated article having a cured film of the composition. More particularly, it relates to an acrylic silicone resin composition which is adapted to be curable with actinic energy radiation and maintains excellent weather resistance inherent to the thermosetting type, and a coated article having weather resistance and mar resistance and allowing for deposition of an inorganic evaporated layer thereon.

### BACKGROUND

Because of many advantages including impact resistance, light weight and workability, organic resin substrates are used in a variety of applications and particularly as automotive material. In addition to the above advantages, the automotive material is required to have resistance to long-term exposure to weather and direct sunshine, i.e., weather resistance and resistance to sliding motion of wipers and windows and rubbing motion during car washing, i.e., mar resistance. For imparting weather resistance and mar resistance to organic resin substrates, JP-A 2014-019611 and JP-A 2013-509485 (WO 2011/056615) propose to treat the resin substrates with silicone hard coats.

While organic resin substrates are provided with a certain level of mar resistance by the silicone hard coat treatment, a further improvement in mar resistance is desired in those areas subject to severer rubbing or abrading action such as automotive sidewalls. For imparting such a higher level of mar resistance, JP-A 2012-224077 and JP-A 2014-531334 (WO 2013/032421) disclose a laminate further having a hardcoat film of inorganic evaporated layer deposited thereon. Specifically, these laminates are constructed by coating an organic resin substrate with an undercoat layer (or primer layer) of thermosetting coating material and depositing an inorganic evaporated layer thereon.

The primer layer must be adherent not only to the organic resin substrate, but also to the hardcoat film of inorganic evaporated layer. These requirements are met by an organosiloxane coating composition. Since the organosiloxane coating composition cures by condensation of siloxane bonds, it is believed that heat curing treatment is essential.

JP 4118711, JP 4176538 and JP-A 2013-035274 disclose laminates having an actinic energy radiation-curable primer layer and an inorganic evaporated layer. There are left many outstanding problems with respect to weather resistance and mar resistance when the primer layer is used alone (i.e., when a hardcoat film of inorganic evaporated layer is not deposited) and a possibility of deposition of inorganic evaporated layer. JP4618512 discloses an actinic energy radiation-curable coating composition based on organosiloxane. Properties of the coating composition including adhesion to an organic resin substrate and a possibility of deposition of a hardcoat film of inorganic evaporated layer are insufficient for use as automotive material.

US2004/0087711A describes coating compositions for plastic substrates, such as polycarbonate resin substrates, to form transparent coatings having mar, weather and chemical resistance. It includes a primer coating composition containing a vinyl base copolymer comprising UV-absorbing benzotriazole based vinyl monomer, alkoxysilyl-containing vinyl monomer and another vinyl monomer which may be include acrylic monomer with a cyclic HAL stabilising group. The primer composition also contains a nitrogen and alkoxysilyl-containing compound such as amino group-containing alkoxysilane, and solvent. It may also contain a UV absorber. Curing is by heating after applying the top coat.

US2008/0096029A describes a primer composition for a polysiloxane hard coating e.g. on a polycarbonate substrate, combining a vinyl copolymer as described above with fine silica particles and a silane hydrolysate, optionally also a thermoplastic vinyl resin, UV absorber and solvent. Curing is by heating.

US2011/0034620A describes silicone hard coating compositions based on a silicone resin combined with colloidal silica, and also a polycarbonate and/or polyester-based urethane-modified vinyl polymer. The coating does not need a primer, and is cured by drying or heating for condensation reaction.

US2012/0059080A describes a UV-curable coating composition comprising a co-condensate of a UV-absorbing alkoxysilane, a UV-curable alkoxysilane and a tetraalkoxysilane, with a polyfunctional acrylate polymer and photopolymerisation initiator. Coating of plastics substrates is the preferred use.

### THE INVENTION

Under the above circumstances, there is a need for a technology relating to a laminate including an organic resin substrate, an undercoat or primer layer, and a hardcoat film of inorganic evaporated layer, the technology desirably being capable of meeting the following features (1) to (6) at the same time.
(1) The undercoat or primer layer is of an actinic energy radiation-curable acrylic silicone resin composition.
(2) The primer layer contains a vinyl base polymer having the general formula (I) as one main component.

   poly-[(A)ₐ-co-(B)_{b}-co-(C)_{c}] (I)

   Herein A, B and C are each independently a vinyl base monomer unit, the bracket and -co- indicate a random copolymer, a, b and c are indicative of a molar fraction, A is a vinyl base monomer having an alkoxysilyl group, a is such a number that monomer A accounts for 1 to 50% by weight of the entire polymer, B is a UV-absorbing vinyl base monomer, b is such a number that monomer B accounts for 5 to 40% by weight of the entire polymer, C is another monomer copolymerizable with the vinyl base monomers, c is such a number that monomer C accounts for {100-(monomer A content)-(monomer B content)}% by weight of the entire polymer.
(3) The composition contains microparticles of at least one inorganic oxide selected from the group consisting of silicon oxide, titanium oxide, cerium oxide and zinc oxide.
(4) A hardcoat film of inorganic evaporated layer can be deposited on the primer layer.
(5) The laminate is improved in weather resistance and mar resistance even when a hardcoat film of inorganic evaporated layer is not deposited on the primer layer.
(6) The primer layer is tenaciously adherent to both the organic resin substrate (typically polycarbonate) and an inorganic evaporated layer.

The meaning of features (1) to (6) is discussed below.

Prior to the present invention, the technology capable of meeting features (1) to (6) at the same time is not known in the art for the following reason. The vinyl base polymer (I) defined in feature (2) is used as thermosetting-type acrylic silicone in the art (for example, JP-A 2008-120986 and JP-A 2012-057026), contradictory to feature (1), i.e., actinic energy radiation-cure type. The vinyl base polymer (I) is designed to exhibit a thermosetting action as a result of hydrolysable organosilyl groups on its side chain condensing with microparticulate inorganic oxide to form a network. Thus the vinyl base polymer (I) is not believed to be curable with actinic energy radiation.

On the other hand, a composition comprising the vinyl base polymer (I) and microparticulate inorganic oxide (referred to in feature (3)) allows for effective deposition of a hardcoat film of inorganic evaporated layer as disclosed in JP-A 2014-531334 (WO 2013/032421). However, since the heat curing of the primer layer requires a large amount of time and energy in the manufacture process, it is desired to shorten the cure time. With respect to the desire to shorten the cure time, a similar problem arises with JP-A 2012-224077. The inventors presumed that if the vinyl base polymer (I) were curable with actinic energy radiation, the manufacture process could be shortened while maintaining the advantages (possible deposition of inorganic evaporated layer and weather resistance) of JP-A 2014-531334 (WO 2013/032421). Such a technology is not known heretofore.

Among the primer layers of actinic energy radiation cure type, some primer layers alone are poor in mar resistance (JP-A 2014-531334 (WO 2013/032421)), and some other primer layers alone are poor in weather resistance (JP4118711, JP4176538 and JP-A 2013-035274). It is then difficult to meet both features (1) and (5) as long as the inventors have studied. For example, in the case of panoramic roofs or other parts of automobiles, different properties are required inside and outside the automobile, and in most cases, the requirement of mar resistance on the interior side is less severe than on the exterior side. Nevertheless, it is desired that the interior side has a level of mar resistance sufficient to withstand daily service. If an interior coating for that purpose is common to the exterior coating, the coating line can be shared, contributing to an improvement in productivity. Therefore feature (5) is important in practice.

Although an actinic energy radiation-curable resin composition comprising vinyl base polymer segments and polysiloxane segments is known from JP4618512, it fails to meet both features (1) and (6) for the reasons that the organic resin substrate is limited to polypropylene in a substantial sense, and the deposition of inorganic evaporated layer is not fully considered.

Since features (1) to (6) are correlated as discussed above, they are difficult to be accomplished at the same time in the state-of-the-art.

The inventors have found that the above problems can be solved by a composition comprising (i) a vinyl base polymer, (ii) a hydrolytic condensate of alkoxysilane, (iii) core/shell type tetragonal titanium oxide solid-solution microparticles, (iv) a polycarbonate and/or polyester-based urethane-modified vinyl polymer, (v) a vinyl polymerizable monomer free of alkoxysilyl, (vi) a photopolymerization initiator, (vii) a solvent, and optionally (viii) a microparticulate inorganic oxide, and by a corresponding coated article and coating method. The inventive composition is curable with actinic energy radiation, tenaciously adherent to organic resin substrates (typically polycarbonate), and a coating thereof exhibits a certain level of mar resistance and weather resistance even in the absence of inorganic evaporated layer, and possesses a possibility of depositing an inorganic evaporated layer thereon for surface modification for the purpose of hardening and weather resistance enhancement.

In one aspect, as specified in claim 1, the invention provides a radiation-curable acrylic silicone resin composition comprising
(i) a vinyl base polymer having the general formula (I):

   poly-[(A)ₐ-co-(B)_{b}-co-(C)_{c}] (1)

   wherein A, B and C are each independently a vinyl base monomer unit, the bracket and -co- indicate a random copolymer, a, b and c are indicative of a molar fraction, A is a vinyl base monomer having an alkoxysilyl group, a is such a number that monomer A accounts for 1 to 50% by weight of the entire polymer, B is a UV-absorbing vinyl base monomer other than A, b is such a number that monomer B accounts for 5 to 40% by weight of the entire polymer, C is a vinyl base monomer other than, and copolymerizable with, the vinyl base monomers A and B, and c is such a number that monomer C accounts for {100-(monomer A content)-(monomer B content)}% by weight of the entire polymer,
(ii) a hydrolytic condensate obtained from (co)hydrolytic condensation of at least one selected from an alkoxysilane and a partial hydrolysate thereof, the alkoxysilane having the general formula (II):

   R¹ₘR²ₙSi(OR³)₄₋ₘ₋ₙ (II)

   wherein R¹ and R² are each independently hydrogen or a monovalent C₁-C₂₀ hydrocarbon group which may be unsubstituted or have a vinyl polymerizable group, two or more groups of R¹ and R² may bond together, R³ is C₁-C₃ alkyl, m and n each are 0 or 1, m+n is 0, 1 or 2,
(iii) core/shell type tetragonal titanium oxide solid-solution microparticles each consisting of a core of tetragonal titanium oxide having tin and manganese incorporated in solid solution and a shell of silicon oxide around the core, wherein the cores have a volume basis 50% cumulative distribution diameter of up to 30 nm, the core/shell type microparticles have a volume basis 50% cumulative distribution diameter of up to 50 nm, as measured by the dynamic light scattering method, the amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1,
(iv) a polycarbonate and/or polyester-based urethane-modified vinyl polymer excluding component (i),
(v) a vinyl polymerizable monomer free of alkoxysilyl, which does not form a polymer and/or condensate prior to irradiation of actinic energy radiation and does not correspond to components (i) and (ii),
(vi) a photopolymerization initiator, and
(vii) a solvent,
   the composition comprising 100 parts by weight of component (i), 100 to 400 parts by weight of component (ii), 10 to 100 parts by weight of component (iii), 5 to 50 parts by weight of component (iv), and 200 to 1,000 parts by weight of component (v).

Preferably the acrylic silicone resin composition further comprises (viii) microparticles of at least one inorganic oxide selected from the group consisting of silicon oxide, cerium oxide and zinc oxide. Preferably, the microparticles of inorganic oxide (viii) have a volume basis 50% cumulative distribution diameter of up to 100 nm, as measured by the dynamic light scattering method.

Preferably the acrylic silicone resin composition further comprises (ix) a UV absorber and/or UV stabilizer.

Preferably, the UV-absorbing vinyl base monomer B constituting the vinyl base polymer (i) is a benzotriazole compound such as of the general formula (III): 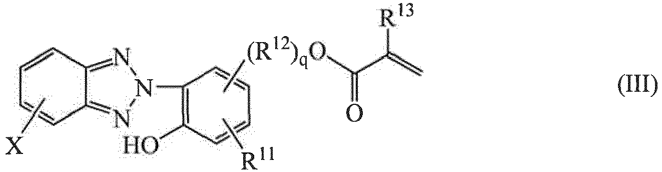 wherein X is hydrogen or chlorine, R¹¹ is hydrogen, methyl or C₄-C₈ tertiary alkyl, R¹² is straight or branched C₂-C₁₀ alkylene, R¹³ is hydrogen or methyl, and q is 0 or 1, or a benzophenone compound such as of the general formula (IV): 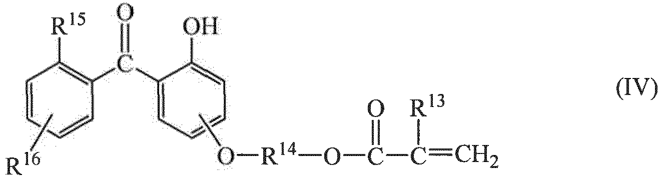 wherein R¹³ is as defined above, R¹⁴ is a substituted or unsubstituted, straight or branched C₂-C₁₀ alkylene, R¹⁵ is hydrogen or hydroxyl, and R¹⁶ is hydrogen, hydroxyl, or C₁-C₆ alkoxy.

Preferably the hydrolytic condensate (ii) is obtained from cohydrolytic condensation of a mixture of the alkoxysilane having formula (II) and/or the partial hydrolysate thereof, and a silyl-modified benzophenone compound having the general formula (V) and/or a partial hydrolysate thereof, 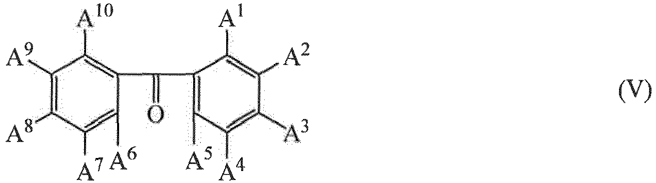 wherein A¹ to A¹⁰ are each independently hydrogen, hydroxyl, C₁-C₅ alkyl or a group of the formula (VI), at least one hydroxyl group and at least one group of formula (VI) being included in formula (V), 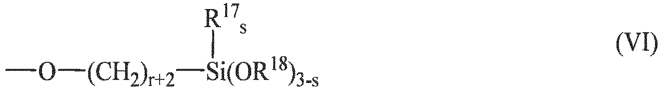 wherein R¹⁷ and R¹⁸ are each independently C₁-C₅ alkyl, r is an integer of 1 to 5, and s is an integer of 0 to 2.

Preferably the solvent (vii) is present in such an amount as to adjust the acrylic silicone resin composition to a solids concentration of 5 to 70% by weight.

In another aspect, as specified in claim 12, the invention provides a method for preparing the acrylic silicone resin composition defined above, comprising the steps of:
feeding a dispersion of component (iii) and/or (viii) to a system containing the alkoxysilane having formula (II) and/or the partial hydrolysate thereof,
effecting (co)hydrolytic condensation in the system, whereby the hydrolytic condensate as component (ii) is obtained as a composite product of component (ii) with component (iii) and/or (viii), and
mixing the product with the remaining components.

In a further aspect (claim 18) the invention provides a coated article comprising an organic resin substrate and the acrylic silicone resin composition which is directly coated and cured onto at least one surface of the substrate; or a coated article comprising an organic resin substrate and the acrylic silicone resin composition which is coated and cured onto at least one surface of the substrate via another organic resin layer which may be a single layer or a multilayer structure.

In a preferred embodiment, the organic resin substrate is polycarbonate.

In a still further aspect (claim 20) the invention provides a method for manufacturing a coated article, comprising the steps of:
(a) coating at least one surface of the substrate with the acrylic silicone resin composition to form a wet coated article,
(b) heat treating the wet coated article, and
(c) irradiating the heat treated article with actinic-energy radiation to cure the composition to form the coated article.

### ADVANTAGEOUS EFFECTS

The inventive composition is curable with actinic energy radiation and found to be tenaciously adherent to organic resin substrates, typically polycarbonate substrates, to impart mar resistance and weather resistance thereto. By coating and curing the composition to an organic resin substrate, there is obtainable a coated article possessing a possibility of depositing a hardcoat film of inorganic evaporated layer thereon.

### FURTHER EXPLANATIONS; OPTIONS AND PREFERENCES

The terms "a" and "an" herein do not denote a limitation of quantity, but rather denote the presence of at least one of the referenced item. As used herein, the notation (Cₙ-Cₘ) means a group containing from n to m carbon atoms per group. The terminology "(meth)acrylic" refers collectively to acrylic and methacrylic. The term "microparticles" is interchangeable with ultra-fine particles and nano-size particles.

### Actinic energy radiation-curable acrylic silicone resin composition

Briefly stated, the actinic energy radiation-curable acrylic silicone resin composition is defined as comprising (i) a vinyl base polymer, (ii) a hydrolytic condensate of alkoxysilane, (iii) core/shell type tetragonal titanium oxide solid-solution particles, (iv) a polycarbonate and/or polyester-based urethane-modified vinyl polymer, (v) a vinyl polymerizable monomer free of alkoxysilyl, (vi) a photopolymerization initiator, (vii) a solvent, and optionally (viii) a microparticulate inorganic oxide.

### Component (i)

Component (i) is a vinyl base polymer having the general formula (I).

poly-[(A)ₐ-co-(B)_{b}-co-(C)_{c}] (I)

Herein A, B and C are each independently a vinyl base monomer unit, the bracket and -co- indicate a random copolymer, a, b and c are indicative of a molar fraction, A is a vinyl base monomer having an alkoxysilyl group, a is such a number that monomer A accounts for 1 to 50% by weight of the entire polymer, B is a UV-absorbing vinyl base monomer, b is such a number that monomer B accounts for 5 to 40% by weight of the entire polymer, C is another monomer copolymerizable with the vinyl base monomers, c is such a number that monomer C accounts for {100-(monomer A content)-(monomer B content)}% by weight of the entire polymer.

The vinyl base monomer unit A is preferably formed by addition polymerization of a vinyl base monomer having an alkoxysilyl group. Suitable vinyl base monomers having an alkoxysilyl group include
(meth)acryloyloxyalkylenealkoxysilanes such as acryloyloxymethyltrimethoxysilane, acryloyloxymethyldimethoxymethylsilane, acryloyloxymethylmethoxydimethylsilane, methacryloyloxymethyltrimethoxysilane, methacryloyloxymethyldimethoxymethylsilane, methacryloyloxymethylmethoxydimethylsilane, 2-acryloyloxyethyltrimethoxysilane, 2-acryloyloxyethyldimethoxymethylsilane, 2-acryloyloxyethylmethoxydimethylsilane, 2-methacryloyloxyethyltrimethoxysilane, 2-methacryloyloxyethyldimethoxymethylsilane, 2-methacryloyloxyethylmethoxydimethylsilane, 3-acryloyloxypropyltrimethoxysilane, 3-acryloyloxypropyldimethoxymethylsilane, 3-acryloyloxypropylmethoxydimethylsilane, 3-methacryloyloxypropyltrimethoxysilane, 3-methacryloyloxypropyldimethoxymethylsilane, 3-methacryloyloxypropylmethoxydimethylsilane, 8-acryloyloxyoctyltrimethoxysilane, 8-methacryloyloxyoctyltrimethoxysilane, acryloyloxymethyltriethoxysilane, acryloyloxymethyldiethoxymethylsilane, acryloyloxymethylethoxydimethylsilane, methacryloyloxymethyltriethoxysilane, methacryloyloxymethyldiethoxymethylsilane, methacryloyloxymethylethoxydimethylsilane, 2-acryloyloxyethyltriethoxysilane, 2-acryloyloxyethyldiethoxymethylsilane, 2-acryloyloxyethylethoxydimethylsilane, 2-methacryloyloxyethyltriethoxysilane, 2-methacryloyloxyethyldiethoxymethylsilane, 2-methacryloyloxyethylethoxydimethylsilane, 3-acryloyloxypropyltriethoxysilane, 3-acryloyloxypropyldiethoxymethylsilane, 3-acryloyloxypropylethoxydimethylsilane, 3-methacryloyloxypropyltriethoxysilane, 3-methacryloyloxypropyldiethoxymethylsilane, 3-methacryloyloxypropylethoxydimethylsilane, 8-acryloyloxyoctyltriethoxysilane, and 8-methacryloyloxyoctyltriethoxysilane;
linear and/or branched alkenylalkoxysilanes such as vinyltrimethoxysilane, vinyldimethoxymethylsilane, vinylmethoxydimethylsilane, allyltrimethoxysilane, allyldimethoxymethylsilane, allylmethoxydimethylsilane, methacryltrimethoxysilane, methacryldimethoxymethylsilane, methacrylmethoxydimethylsilane, 4-trimethoxysilyl-1-butene, 5-trimethoxysilyl-1-pentene, 6-trimethoxysilyl-1-hexene, 7-trimethoxysilyl-1-heptene, and 8-trimethoxysilyl-1-octene; and
aromatic unsaturated alkoxysilanes such as p-trimethoxysilylstyrene, 1,4-divinyl-2-trimethoxysilylbenzene, and p-trimethoxysilyl-α-methylstyrene,
   which may be used alone or in admixture. Inter alia, 3-methacryloyloxypropyltrimethoxysilane, which is available as KBM-503 from Shin-Etsu Chemical Co., Ltd., is preferred for availability and reactivity.

Vinyl base monomer units A are copolymerized with monomer units B and C in such a molar fraction "a" that monomer units A may account for 1 to 50%, preferably 2 to 40%, and more preferably 5 to 35% by weight based on the entire weight of polymer (I). If the proportion of vinyl base monomer units A is less than 1 wt% of the entire polymer, they may form few networks with the microparticulate inorganic component. If the proportion exceeds 50 wt%, storage stability and weather resistance may decline.

The vinyl base monomer unit B is preferably formed by addition polymerization of a vinyl base monomer having a UV absorbing group. Any vinyl base monomer having a UV absorbing group may be used as long as it has a UV absorbing group and a vinyl polymerizable group. As used herein, the term "UV" refers to ultraviolet radiation having a wavelength in the range of about 200 nm to about 400 nm. Suitable UV absorbing groups include organic groups having a benzotriazole, benzophenone, resorcinol and triazine group. Suitable vinyl polymerizable groups include vinyl, allyl, styryl, acrylic and methacrylic groups.

Typical of the vinyl base monomer having a UV absorbing group are (meth)acrylic monomers having a UV absorbing group in the molecule, more typically benzotriazole compounds having the general formula (III) and benzophenone compounds having the general formula (IV). 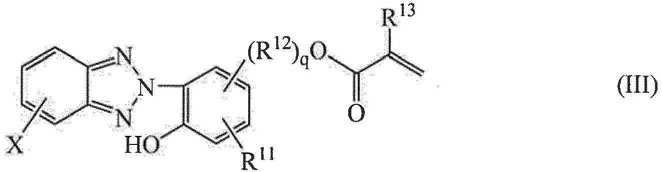 Herein X is hydrogen or chlorine, R¹¹ is hydrogen, methyl or C₄-C₈ tertiary alkyl, R¹² is straight or branched C₂-C₁₀ alkylene, R¹³ is hydrogen or methyl, and q is 0 or 1. 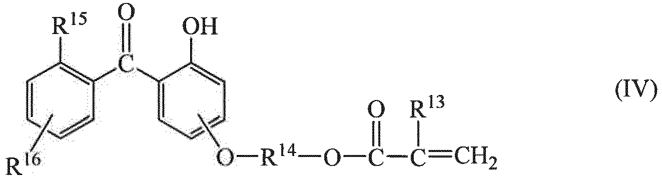 Herein R¹³ is as defined above, R¹⁴ is a substituted or unsubstituted, straight or branched C₂-C₁₀ alkylene, R¹⁵ is hydrogen or hydroxyl, and R¹⁶ is hydrogen, hydroxyl, or C₁-C₆ alkoxy.

In formula (III), examples of the C₄-C₈ tertiary alkyl of R¹¹ include tert-butyl, tert-pentyl, tert-hexyl, tert-heptyl, tert-octyl, and di-tert-octyl. Examples of the straight or branched C₂-C₁₀ alkylene group of R¹² include ethylene, trimethylene, propylene, tetramethylene, 1,1-dimethyltetramethylene, butylene, octylene and decylene.

In formula (IV), examples of the straight or branched C₂-C₁₀ alkylene group of R¹⁴ include those exemplified above for R¹² and substituted forms of such groups in which at least one hydrogen is substituted by halogen. Examples of the alkoxy group of R¹⁵ include methoxy, ethoxy, propoxy, and butoxy.

Examples of the benzotriazole compound having formula (III) include 2-(2'-hydroxy-5'-(meth)acryloxyphenyl)-2H-benzotriazole, 2-(2'-hydroxy-3'-tert-butyl-5'-(meth)acryloxymethylphenyl)-2H-benzotriazole, 2-[2'-hydroxy-5'-(2-(meth)acryloxyethyl)phenyl]-2H-benzotriazole, 2-[2'-hydroxy-3'-tert-butyl-5'-(2-(meth)acryloxyethyl)phenyl]-5-chloro-2H-benzotriazole, and 2-[2'-hydroxy-3'-methyl-5'-(8-(meth)acryloxyoctyl)phenyl]-2H-benzotriazole.

Examples of the benzophenone compounds having formula (IV) include 2-hydroxy-4-(2-(meth)acryloxyethoxy)benzophenone, 2-hydroxy-4-(4-(meth)acryloxybutoxy)benzophenone, 2,2'-dihydroxy-4-(2-(meth)acryloxyethoxy)benzophenone, 2,4-dihydroxy-4'-(2-(meth)acryloxyethoxy)benzophenone, 2,2',4-trihydroxy-4'-(2-(meth)acryloxyethoxy)benzophenone, 2-hydroxy-4-(3-(meth)acryloxy-2-hydroxypropoxy)benzophenone, and 2-hydroxy-4-(3-(meth)acryloxy-1-hydroxypropoxy)benzophenone.

Of the UV absorbing vinyl base monomers, benzotriazole compounds having formula (III) are preferred, with 2-[2'-hydroxy-5'-(2-(meth)acryloxyethyl)phenyl]-2H-benzotriazole being most preferred. The UV absorbing vinyl base monomers may be used alone or in admixture.

Vinyl base monomer units B are copolymerized with monomer units A and C in such a molar fraction "b" that monomer units B may account for 5 to 40%, preferably 5 to 30%, and more preferably 8 to 25% by weight based on the entire weight of polymer (I). If the proportion of vinyl base monomer units B is less than 5 wt% of the entire polymer, weather resistance may be poor. If the proportion exceeds 40 wt%, adhesion to the substrate may become weak.

The other vinyl base monomer unit C copolymerizable with the vinyl base monomer units A and B is not particularly limited as long as it is so copolymerizable. Suitable monomers are vinyl monomers which include (meth)acrylic monomers having a cyclic hindered amine structure,

(meth)acrylates, (meth)acrylonitriles, (meth)acrylamides, alkyl vinyl ethers, alkyl vinyl esters, styrene, and derivatives thereof.

Examples of the (meth)acrylic monomer having a cyclic hindered amine structure include 2,2,6,6-tetramethyl-4-piperidinyl methacrylate and 1,2,2,6,6-pentamethyl-4-piperidinyl methacrylate.

Examples of (meth)acrylates and derivatives include
(meth)acrylic acid esters of monohydric alcohols such as methyl (meth)acrylate, ethyl(meth)acrylate, n-propyl(meth)acrylate, isopropyl(meth)acrylate, n-butyl(meth)acrylate, isobutyl(meth)acrylate, sec-butyl(meth)acrylate, t-butyl(meth)acrylate, n-pentyl(meth)acrylate, isopentyl(meth)acrylate, n-hexyl(meth)acrylate, isohexyl(meth)acrylate, n-heptyl(meth)acrylate, isoheptyl(meth)acrylate, 2-ethylhexyl(meth)acrylate, n-octyl(meth)acrylate, isooctyl(meth)acrylate, n-nonyl(meth)acrylate, isononyl(meth)acrylate, n-decyl(meth)acrylate, isodecyl(meth)acrylate, n-undecyl(meth)acrylate, n-dodecyl(meth)acrylate, lauryl(meth)acrylate, palmityl(meth)acrylate, stearyl(meth)acrylate, cyclohexyl(meth)acrylate, 4-methylcyclohexyl(meth)acrylate, 4-tert-butylcyclohexyl(meth)acrylate, isobornyl(meth)acrylate, dicyclopentanyl(meth)acrylate, dicyclopentenyloxyethyl(meth)acrylate, and benzyl(meth)acrylate;
(meth)acrylic acid esters of alkoxy(poly)alkylene glycols such as 2-methoxyethyl(meth)acrylate, 2-methoxypropyl(meth)acrylate, 3-methoxypropyl(meth)acrylate, 2-methoxybutyl(meth)acrylate, 3-methoxybutyl(meth)acrylate, 4-methoxybutyl(meth)acrylate, methoxypolyethylene glycol (meth)acrylate(ethylene glycol units, typically 2 to 20), and methoxypolypropylene glycol(meth)acrylate(propylene glycol units, typically 2 to 20);
mono(meth)acrylic acid esters of polyols such as 2-hydroxyethyl(meth)acrylate, 2-hydroxypropyl(meth)acrylate, 3-hydroxypropyl(meth)acrylate, 2-hydroxybutyl(meth)acrylate, 3-hydroxybutyl(meth)acrylate, 4-hydroxybutyl(meth)acrylate, glycerol mono(meth)acrylate, pentaerythritol mono(meth)acrylate, polyethylene glycol mono(meth)acrylate(ethylene glycol units, typically 2 to 20), polypropylene glycol mono(meth)acrylate (propylene glycol units, typically 2 to 20);
poly(meth)acrylic acid esters of polyols such as ethylene glycol di(meth)acrylate, propylene glycol di(meth)acrylate, butylene glycol di(meth)acrylate, glycerol di(meth)acrylate, glycerol tri(meth)acrylate, pentaerythritol di(meth)acrylate, pentaerythritol tetra(meth)acrylate, cyclohexane-1,4-diol di(meth)acrylate, polyethylene glycol di(meth)acrylate (ethylene glycol units, typically 2 to 20), and polypropylene glycol di(meth)acrylate (propylene glycol units, typically 2 to 20);
(poly)esters of non-polymerizable polybasic acids with hydroxyalkyl(meth)acrylates such as mono[2-(meth)acryloyloxyethyl] succinate, di[2-(meth)acryloyloxyethyl]succinate, mono[2-(meth)acryloyloxyethyl]adipate, di[2-(meth)acryloyloxyethyl]adipate, mono[2-(meth)acryloyloxyethyl]phthalate, and di[2-(meth)acryloyloxyethyl]phthalate;
amino-containing(meth)acrylates such as 2-aminoethyl(meth)acrylate, 2-(N-methylamino)ethyl(meth)acrylate, 2-(N,N-dimethylamino)ethyl(meth)acrylate, 2-(N-ethylamino)ethyl(meth)acrylate, 2-(N,N-diethylamino)ethyl(meth)acrylate, 3-(N,N-dimethylamino)propyl(meth)acrylate, and 4-(N,N-dimethylamino)butyl(meth)acrylate; and
epoxy-containing(meth)acrylates such as glycidyl(meth)acrylate.

Examples of the (meth)acrylonitrile derivatives include α -chloroacrylonitrile, α-chloromethylacrylonitrile, α-trifluoromethylacrylonitrile, α-methoxyacrylonitrile, α-ethoxyacrylonitrile, and vinylidene cyanide.

Examples of the (meth)acrylamide derivatives include N-methyl(meth)acrylamide, N,N-dimethyl(meth)acrylamide, N-ethyl(meth)acrylamide, N,N-diethyl(meth)acrylamide, N-methoxy(meth)acrylamide, N,N-dimethoxy(meth)acrylamide, N-ethoxy(meth)acrylamide, N,N-diethoxy(meth)acrylamide, diacetone(meth)acrylamide, N-methylol(meth)acrylamide, N-(2-hydroxyethyl) (meth)acrylamide, N,N-dimethylaminomethyl(meth)acrylamide, N-(2-dimethylamino)ethyl(meth)acrylamide, N,N'-methylenebis(meth)acrylamide, and N,N'-ethylenebis(meth)acrylamide.

Examples of the alkyl vinyl ether include methyl vinyl ether, ethyl vinyl ether, butyl vinyl ether, and hexyl vinyl ether. Examples of the alkyl vinyl ester include vinyl formate, vinyl acetate, vinyl acrylate, vinyl butyrate, vinyl caproate, and vinyl stearate. Examples of the styrene and derivatives thereof include styrene, α-methylstyrene, and vinyltoluene.

Of the foregoing monomers, (meth)acrylates are preferred. More preferred are methyl(meth)acrylate, ethyl (meth)acrylate, isopropyl(meth)acrylate, n-butyl(meth)acrylate, isobutyl(meth)acrylate, n-hexyl(meth)acrylate, 2-ethylhexyl(meth)acrylate, isononyl(meth)acrylate, lauryl(meth)acrylate, cyclohexyl(meth)acrylate, 4-methylcyclohexyl(meth)acrylate, 4-tert-butylcyclohexyl (meth)acrylate, isobornyl (meth)acrylate, dicyclopentanyl (meth)acrylate, and dicyclopentenyloxyethyl (meth)acrylate.

The vinyl base monomers C may be used alone or in admixture of two or more. Generally they are vinyl monomers not having alkoxysilyl group and not carrying a UV-absorbing group.

Vinyl base monomer units C are copolymerized with monomer units A and B in such a molar fraction "c" that monomer units C may account for {100-(monomer A content)-(monomer B content)}%, specifically 10 to 94%, preferably 20 to 94%, and more preferably 35 to 90% by weight based on the entire weight of polymer (I). If the proportion of vinyl base monomer units C is less than 10 wt% of the entire polymer, a coating may have a defective appearance. If the proportion exceeds 94 wt%, the polymer may form few crosslinks with the microparticulate inorganic component, with a decline of durability.

Component (i) is preferably obtained from copolymerization reaction of vinyl base monomers A, B and C. Copolymerization reaction may be performed by providing a solution of the monomers, adding a radical polymerization initiator to the solution, and heating the solution, typically at a temperature of 50 to 150°C, especially 70 to 120°C for 1 to 10 hours, especially 3 to 8 hours. Suitable initiators include peroxides such as dicumyl peroxide and benzoyl peroxide and azo compounds such as azobisisobutyronitrile.

Preferably component (i) has a weight average molecular weight (Mw) of 1,000 to 300,000, more preferably 5,000 to 250,000, as measured by gel permeation chromatography (GPC) versus polystyrene standards. A polymer having too high Mw is difficult to synthesize or handle because of an excessively high viscosity. With too low Mw, a coating may become defective in outer appearance such as whitening and weathering cracks and fail to gain sufficient adhesion, durability and weather resistance.

### Component (ii)

Component (ii) is a hydrolytic condensate obtained/obtainable from (co)hydrolytic condensation of at least one selected from an alkoxysilane and a partial hydrolysate thereof. The alkoxysilane has the general formula (II):

R¹ₘR²ₙSi (OR³)₄₋ₘ₋ₙ (II)

wherein R¹ and R² are each independently hydrogen or a monovalent C₁-C₂₀ hydrocarbon group which may be unsubstituted or have a vinyl polymerizable group, two or more groups of R¹ and R² may bond together, R³ is C₁-C₃ alkyl, m and n each are 0 or 1, and m+n is 0, 1 or 2.

Examples of the alkoxysilane of formula (II) wherein m=n=0 include tetraalkoxysilanes (ii-Q) such as tetramethoxysilane, tetraethoxysilane, tetrapropoxysilane and tetrabutoxysilane. Inter alia, tetraethoxysilane is most preferred for availability, reactivity and safety.

Examples of the alkoxysilane of formula (II) wherein m=1 and n=0 include trialkoxysilanes (ii-T) such as methyltrimethoxysilane, ethyltrimethoxysilane, propyltrimethoxysilane, vinyltrimethoxysilane, 3-chloropropyltrimethoxysilane, 3-glycidoxypropyltrimethoxysilane, 2-(3,4-epoxycyclohexyl)ethyltrimethoxysilane, p-styryltrimethoxysilane, 3-methacryloyloxypropyltrimethoxysilane, 3-acryloyloxypropyltrimethoxysilane, 3-methacryloyloxypropyltriethoxysilane, 3-acryloyloxypropyltriethoxysilane, N-2-(aminoethyl)-3-aminopropyltrimethoxysilane, 3-aminopropyltrimethoxysilane, N-phenyl-3-aminopropyltrimethoxysilane, 3-mercaptopropyltrimethoxysilane, and 3-isocyanatopropyltrimethoxysilane. Inter alia, 3-methacryloyloxypropyltrimethoxysilane, 3-acryloyloxypropyltrimethoxysilane, and 3-methacryloyloxypropyltriethoxysilane are preferred.

Examples of the alkoxysilane of formula (II) wherein m=n=1 include dialkoxysilanes (ii-D) such as dimethyldimethoxysilane, ethylmethyldimethoxysilane, 3-chloropropyldimethoxymethylsilane, 3-glycidoxypropyldimethoxymethylsilane, 2-(3,4-epoxycyclohexyl)ethyldimethoxymethylsilane, p-styryldimethoxymethylsilane, 3-methacryloyloxypropyldimethoxymethylsilane, 3-acryloyloxypropyldimethoxymethylsilane, 3-methacryloyloxypropyldiethoxymethylsilane, 3-acryloyloxypropyldiethoxymethylsilane, N-2-(aminoethyl)-3-aminopropyldimethoxymethylsilane, 3-aminopropyldimethoxymethylsilane, N-phenyl-3-aminopropyldimethoxymethylsilane, 3-mercaptopropyldimethoxymethylsilane, and 3-isocyanatopropyldimethoxymethylsilane. Inter alia, 3-methacryloyloxypropyldimethoxymethylsilane and 3-acryloyloxypropyldimethoxymethylsilane are preferred.

In forming component (ii) or hydrolytic condensate, a tetraalkoxysilane (ii-Q), trialkoxysilane (ii-T), and dialkoxysilane (ii-D) may be combined in a suitable proportion. Preferably, tetraalkoxysilane (ii-Q) may be used in an amount of 30 to 80%, more preferably 40 to 70% by weight based on the total weight of silanes used. If the amount of (ii-Q) exceeds 80 wt%, a coating may become brittle. If the amount of (ii-Q) is less than 30 wt%, a coating may become less receptive to a hardcoat film of inorganic evaporate layer if further deposited thereon. Preferably, trialkoxysilane (ii-T) may be used in an amount of 20 to 60%, more preferably 25 to 45% by weight based on the total weight of silanes used. If the amount of (ii-T) exceeds 60 wt%, a coating may become brittle. If the amount of (ii-T) is less than 20 wt%, a coating may become less tough. Preferably, dialkoxysilane (ii-D) may be used in an amount of 0 to 20%, more preferably 5 to 15% by weight based on the total weight of silanes used. Although dialkoxysilane (ii-D) may be used as desired, without a need to set the lower limit, it is preferably used for imparting toughness. A (ii-D) amount in excess of 20 wt% may lead to degradation of wettability and coating outer appearance. It is preferred that any one of silanes (ii-Q), (ii-T) and (ii-D) have a vinyl polymerizable group. Preferably, one or more may be selected from the foregoing exemplary compounds for each of silanes (ii-Q), (ii-T) and (ii-D), and they may be combined in amounts in the above-defined range.

Component (ii) may be a hydrolytic condensate obtained from (co)hydrolytic condensation of at least one selected from partial hydrolysates of alkoxysilanes having formula (II). The partial hydrolysate of an alkoxysilane refers to a relatively low molecular weight oligomer containing an organic substituent group and alkoxy group per molecule. It may be used for the purpose of adjusting the molecular weight of component (ii) or controlling reactivity during (co)hydrolytic condensation. Such an oligomer may be prepared by reacting an alkoxysilane with water in an amount of not more than the stoichiometry with respect to alkoxysilyl. Suitable oligomers are commercially available, for example, under the trade name of KC-89S, KR-500, X-40-9225, KR-217, KR-9218, KR-213, KR-510, KR-513, X-40-9227, X-40-9247, X-41-1053, X-41-1056, X-41-1805, X-41-1810, and X-40-2308, all from Shin-Etsu Chemical Co., Ltd.

As mentioned above, component (ii) is a hydrolytic condensate obtained from (co)hydrolytic condensation of at least one selected from alkoxysilanes having formula (II) and partial hydrolysates thereof. It may be prepared by mixing a premix of a suitable silane(s) with water or adding a suitable silane(s) dropwise to water, optionally previously adding a solvent and catalyst to water, and heating the system. The (co)hydrolytic condensation may be performed by a standard technique. Component (ii) may further contain additives such as a viscosity regulator, condensation catalyst and leveling agent as long as the function of component (ii) is not compromised.

Preferably, the hydrolytic condensate as component (ii) is a hydrolytic condensate obtained from cohydrolysis of a mixture of the alkoxysilane having above formula (II) and/or a partial hydrolysate thereof and a silyl-modified benzophenone compound having the general formula (V) and/or a partial hydrolysate thereof. In this embodiment, the hydrolytic condensate derived from the compound of formula (V) and/or partial hydrolysate thereof preferably accounts for 0.1 to 20%, more preferably 1 to 10% by weight of component (ii). 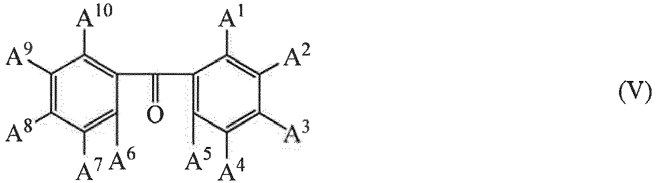 Herein A¹ to A¹⁰ are each independently hydrogen, hydroxyl, C₁-C₅ alkyl or a group of the following formula (VI). 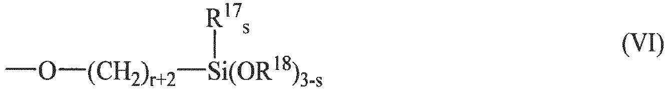 At least one hydroxyl group and at least one group of formula (VI) are included in formula (V). In formula (VI), R¹⁷ and R¹⁸ are each independently C₁-C₅ alkyl, r is an integer of 1 to 5, and s is an integer of 0 to 2.

In formula (V), examples of the C₁-C₅ alkyl group of A¹ to A¹⁰ include straight or branched alkyl groups such as methyl, ethyl, propyl, isopropyl, butyl, isobutyl, sec-butyl, tert-butyl, pentyl, isopentyl, and neopentyl.

In formula (VI), examples of the C₁-C₅ alkyl group of R¹⁷ and R¹⁸ include straight or branched alkyl groups such as methyl, ethyl, propyl, isopropyl, butyl, isobutyl, sec-butyl, tert-butyl, pentyl, isopentyl, and neopentyl. Inter alia, methyl is most preferred. The subscript r is an integer of 1 to 5, preferably 3, and s is an integer of 0 to 2, preferably 0 or 1, more preferably 0.

A compound containing a group of formula (VI) wherein s=0 is classified to the above trialkoxysilane (ii-T) and therefore, it is preferably subject to (co)hydrolysis in an amount in the above preferred range. A compound containing a group of formula (VI) wherein s=1 is classified to the above dialkoxysilane (ii-D) and therefore, it is preferably subject to (co)hydrolysis in an amount in the above preferred range. A compound containing a group of formula (VI) wherein s=2 is not classified to any of the above alkoxysilanes (ii-Q), (ii-T) and (ii-D), and it is preferably subject to (co)hydrolysis in an amount of up to 5%, more preferably up to 3% by weight based on the hydrolytic condensate as component (ii).

Examples of the compounds having formulae (V) and (VI) include [2-hydroxy-4-(3-(trimethoxysilyl)propoxy)]benzophenone, [2-hydroxy-4-(3-(triethoxysilyl)propoxy)]benzophenone, [2-hydroxy-4-(3-(dimethoxymethylsilyl)propoxy)]benzophenone, and [2-hydroxy-4-(3-methoxydimethylsilyl)propoxy]]benzophenone, with [2-hydroxy-4-(3-(trimethoxysilyl)propoxy)]benzophenone being preferred.

Preferably component (ii) has a weight average molecular weight (Mw) of 500 to 8,000, more preferably 800 to 5,000, even more preferably 1,000 to 3,000, as measured by GPC versus polystyrene standards. With Mw of less than 500, problems may arise like insufficient storage stability and coating brittleness. With Mw of more than 8,000, problems may arise like insufficient coating hardness and less compatibility with other components (i), (iii) to (ix).

### Component (iii)

Component (iii) is core/shell type tetragonal titanium oxide solid-solution microparticles each consisting of a core of tetragonal titanium oxide having tin and manganese incorporated in solid solution and a shell of silicon oxide around the core. The cores have a volume basis 50% cumulative distribution diameter (D50) of up to 30 nm, and the core/shell type microparticles have a volume basis 50% cumulative distribution diameter (D₅₀) of up to 50 nm, as measured by the dynamic light scattering method. The amount of tin incorporated in solid solution is to provide a molar ratio of titanium to tin (Ti/Sn) of 10/1 to 1,000/1, and the amount of manganese incorporated in solid solution is to provide a molar ratio of titanium to manganese (Ti/Mn) of 10/1 to 1,000/1.

When tin and manganese are incorporated in solid solution form in tetragonal titanium oxide, the amount of tin incorporated in solid solution is to provide a molar ratio of titanium to tin (Ti/Sn) of 10/1 to 1,000/1, preferably 20/1 to 200/1, and the amount of manganese incorporated in solid solution is to provide a molar ratio of titanium to manganese (Ti/Mn) of 10/1 to 1,000/1, preferably 20/1 to 200/1. If the amount of tin or manganese in solid solution form is to provide a molar ratio Ti/Sn or Ti/Mn of less than 10/1, there may be observed considerable light absorption in the visible region assigned to tin and manganese. If the amount of tin or manganese in solid solution form is to provide a molar ratio Ti/Sn or Ti/Mn of more than 1,000/1, then the photocatalytic activity is not fully deprived and the crystal system may take the anatase type having a low visible light absorptivity.

The shell of silicon oxide formed around the core of microparticulate tetragonal titanium oxide having tin and manganese incorporated in solid solution contains silicon oxide as the major component and may contain another component such as tin or aluminum, while it may be formed by any desired techniques. For example, the shell of silicon oxide may be formed by hydrolytic condensation of a tetraalkoxysilane. Suitable tetraalkoxysilanes include tetramethoxysilane, tetraethoxysilane, tetra(n-propoxy)silane, tetra(i-propoxy)silane, and tetra(n-butoxy)silane, which are commonly available, with tetraethoxysilane being preferred from the aspects of reactivity and safety. As the silane, for example, KBE-04 commercially available from Shin-Etsu Chemical Co., Ltd. may be used. Hydrolytic condensation of a tetraalkoxysilane may be conducted in water, optionally in the presence of a condensation catalyst such as ammonia, aluminum salts, organoaluminum compounds, tin salts, or organotin compounds. Inter alia, ammonia is especially preferred since it can simultaneously function as a dispersing agent for microparticulate cores. The tetraalkoxysilane may be used in such an amount that silicon oxide accounts for 20 to 50%, preferably 25 to 45%, and more preferably 30 to 40% by weight based on the weight of silicon oxide-coated titanium oxide after hydrolysis. An amount of silicon oxide of less than 20 wt% may indicate insufficient shell formation whereas an amount in excess of 50 wt% may promote agglomeration of microparticles so that the dispersion becomes opaque.

In the core/shell type tetragonal titanium oxide solid-solution particles, cores of tetragonal titanium oxide having tin and manganese incorporated in solid solution should have a volume basis 50% cumulative distribution diameter (D₅₀) of up to 30 nm, preferably up to 20 nm, and the core/shell type tetragonal titanium oxide solid-solution particles should have a volume basis 50% cumulative distribution diameter (D₅₀) of up to 50 nm, preferably up to 30 nm, both as measured by the dynamic light scattering method using laser light. If the D₅₀ value of the microparticulate cores or the core/shell type solid-solution particles exceeds the upper limit, undesirably the dispersion may become opaque. The lower limit of D₅₀ of the microparticulate cores is at least 5 nm, and the lower limit of D₅₀ of the core/shell type solid-solution particles is at least 6 nm. It is noted that the volume basis 50% cumulative distribution diameter (D₅₀, also referred to as "average particle size") may be as measured by an instrument such as Nanotrac UPA-EX150 (Nikkiso Co., Ltd.); this is well-known.

Component (iii) may be formulated by a technique of adding component (iii) in solid state to a composition and mechanically dispersing or a technique of adding a colloidal solution of component (iii) dispersed in a solvent, which maintains the primary particle size. The technique of adding a colloidal solution of component (iii) is preferred. Suitable dispersing solvents for the colloidal solution include water, methanol, ethanol, propanol, propylene glycol monomethyl ether, and propylene glycol monomethyl ether acetate, with water and ethanol being preferred. The colloidal solution preferably has a concentration of 1 to 40%, more preferably 5 to 30%, and even more preferably 10 to 20% by weight of dispersed particles or component (iii). A concentration of less than 1 wt% indicates a predominant proportion of the solvent which may break the balance of the composition whereas a colloidal solution with a concentration in excess of 40 wt% may encounter practical problems such as gelation and flocculation by solvent shock during formulation.

Component (iii) may be prepared by the known method, for example, JP-A 2014-019611 (US 20140023855, EP 2708513).

### Component (iv)

Component (iv) is a polycarbonate and/or polyester-based urethane-modified vinyl polymer excluding component (i). Since component (iv) is free of an alkoxysilyl group, it does not fall in the scope of component (i). Vinyl polymers containing neither a polycarbonate and/or polyester-based urethane modifying group nor an alkoxysilyl group do not fall in the scope of components (i) and (iv). Vinyl polymers containing both a polycarbonate and/or polyester-based urethane modifying group and an alkoxysilyl group do not fall in the scope of component (iv), but some fall in the scope of component (i). There exists a vinyl polymer corresponding to a special form of component (i) in which vinyl base monomer unit C contains a polycarbonate and/or polyester-based urethane modifying group and satisfying the conditions of component (i). In the invention, such a special case is not excluded. In this case, the relevant vinyl polymer may be formulated and reckoned as component (i) in the composition although it possesses a polycarbonate and/or polyester-based urethane modifying moiety.

Component (iv) is a polycarbonate and/or polyester-based urethane-modified vinyl polymer, which serves as an adhesion improver. In the cured coating, component (iv) is present as a separate phase from the other components and has a graded concentration in a thickness direction of the coating so that it serves to increase affinity to the organic resin substrate without any loss of mar resistance performance, thereby achieving adhesion. The polycarbonate and/or polyester-based urethane-modified vinyl polymer as component (iv) is a vinyl-based polymer having polycarbonate or polyester-based urethane grafted thereto. Illustratively, the polymer is preferably a vinyl-based polymer having as side chain a polycarbonate or polyester-based urethane obtained from reaction of an aliphatic polycarbonate diol or aliphatic polyester diol with an aromatic diisocyanate, more preferably a vinyl-based polymer having as side chain a polycarbonate-based urethane obtained from reaction of an aliphatic polycarbonate diol with an aromatic diisocyanate.

Examples of the aliphatic polycarbonate diol include 1,4-tetramethylene, 1,5-pentamethylene, 1,6-hexamethylene, 1,12-dodecane, and 1,4-cyclohexane types and mixtures thereof. Examples of the aromatic isocyanate include 4,4'-diphenylmethane diisocyanate, 2,4-tolylene diisocyanate, 2,6-tolylene diisocyanate, m-xylene diisocyanate, naphthalene diisocyanate, and mixtures thereof. By reacting such a diol with a diisocyanate in a standard manner, a polycarbonate-based polyurethane is obtainable.

As the monomer from which the vinyl-based polymer is derived, any monomer having a polymerizable vinyl group may be used. Suitable monomers include methyl (meth)acrylate, ethyl (meth)acrylate, butyl (meth)acrylate, cyclohexyl (meth)acrylate, glycidyl (meth)acrylate, 2-hydroxyethyl (meth)acrylate, (meth)acrylic acid, styrene, and vinyl acetate. By polymerizing such a monomer or monomers in a standard manner, a vinyl-based polymer is obtainable.

The urethane-modified vinyl polymer as component (iv) is preferably available as an organic solvent solution because of ease of synthesis and ease of handling. The organic solvent used herein is preferably a relatively polar organic solvent in which component (iv) is readily dissolved. Suitable organic solvents include alcohols such as isopropyl alcohol, n-butanol, isobutanol, tert-butanol, and diacetone alcohol, ketones such as methyl ethyl ketone, diethyl ketone, methyl isobutyl ketone, cyclohexanone, and diacetone alcohol, ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate, and esters such as ethyl acetate, propyl acetate, butyl acetate, and cyclohexyl acetate.

The polycarbonate and/or polyester-based urethane-modified vinyl polymer as component (iv) should preferably have a weight average molecular weight (Mw) of 5,000 to 50,000, more preferably 7,000 to 40,000, as measured versus polystyrene standards by GPC. If Mw < 5,000, sufficient adhesion to the organic resin substrate may not be available. If Mw > 50,000, component (iv) may become less soluble in the composition or separate out, and the cured coating may become less transparent.

The polycarbonate and/or polyester-based urethane-modified vinyl polymer as component (iv) preferably has a hydroxyl number of at least 10, more preferably 20 to 100, based on the solids content of component (iv). If the hydroxyl number of component (iv) is less than 10, component (iv) may become less compatible with the composition or separate out.

It is noted that component (iv) is commercially available, for example, under the trade name of Akurit 8UA-347, 357 and 366 (polycarbonate base) and Akurit 8UA-140, 146, 301 and 318 (polyester base) from Taisei Fine Chemical Co., Ltd.

### Component (v)

Component (v) is a vinyl polymerizable monomer free of alkoxysilyl. This component is in monomer form and does not form a polymer and/or condensate prior to irradiation of actinic energy radiation and so does not correspond to components (i) and (ii). Since component (v) is a monomer prior to irradiation of actinic energy radiation, it does not fall in the scope of component (i). Vinyl polymerizable monomers having an alkoxysilyl group do not fall in the scope of component (v), but some fall in the scope of component (ii). There is a possibility that even after an alkoxysilane having a vinyl polymerizable group constituting one of units of component (ii) is subjected to hydrolytic condensation, a part of the monomer is left behind. Such a special case is not excluded from the invention. In this case, the relevant monomer may be considered and formulated as component (ii) in the composition although it possesses a vinyl polymerizable group.

Suitable vinyl polymerizable monomers as component (v) include (meth)acrylic esters formed from (meth)acrylic acid and (polyhydric) alcohols, and (meth)acrylic acid.

Examples of the (meth)acrylic esters of (meth)acrylic acid with (optionally polyhydric) alcohols include monoesters such as
methyl methacrylate (MMA), methyl acrylate (MA), ethyl methacrylate, ethyl acrylate, hydroxyethyl acrylate (HEA), hydroxyethyl methacrylate (HEMA), hydroxypropyl acrylate, 4-hydroxybutyl acrylate, isobutyl acrylate, tert-butyl acrylate, n-octyl acrylate, isooctyl acrylate, isononyl acrylate, lauryl acrylate, stearyl acrylate, isostearyl acrylate, isonorbornyl acrylate, tetrahydrofurfuryl acrylate, methoxyethyl acrylate, methoxypolyethylene glycol acrylate, 2-methyl-2-ethyl-1,3-dioxolan-4-yl acrylate, [{cyclohexanespiro-2-(1,3-dioxolan-4-yl)}methyl] acrylate, and [(3-ethyloxetan-3-yl)methyl] acrylate;
diesters such as ethylene glycol diacrylate, propylene glycol diacrylate, butanediol diacrylate, pentanediol diacrylate, hexanediol diacrylate, heptanediol diacrylate, octanediol diacrylate, nonanediol diacrylate, decanediol diacrylate, glycerol 1,2-diacrylate, glycerol 1,3-diacrylate, pentaerythritol diacrylate, 2-hydroxy-3-acryloyloxypropyl methacrylate, tricyclodecane dimethanol diacrylate, dipropylene glycol diacrylate, and tripropylene glycol diacrylate; and
polyfunctional esters such as glycerol triacrylate, trimethylolpropane triacrylate, pentaerythritol triacrylate, dipentaerythritol triacrylate, ethoxylated isocyanuric acid triacrylate, ethoxylated glycerol triacrylate, ethoxylated trimethylolpropane triacrylate, pentaerythritol tetraacrylate, dipentaerythritol hexaacrylate, ditrimethylolpropane tetraacrylate, ethoxylated pentaerythritol tetraacrylate, trimethylolpropane trimethacrylate, and trispentaerythritol octaacrylate.

The monoester may be used in an amount of 0 to 70%, preferably 0 to 60%, and more preferably 0 to 50% by weight based on the total weight of component (v), i.e., esters. The diester may be used in an amount of 1 to 30%, preferably 2 to 25%, and more preferably 5 to 20% by weight based on the total weight of esters. The polyfunctional ester may be used in an amount of 50 to 100%, preferably 50 to 90%, and more preferably 50 to 80% by weight based on the total weight of esters. Although the monoester is optional, it is important from the aspect of reducing or eliminating the solvent content of a coating composition and may be used instead of solvent. If the amount of monoester exceeds 70 wt%, a coating may become brittle. If the amount of diester is less than 1 wt%, a coating may become less flexible. If the amount of diester exceeds 30 wt%, a coating may have poor mar resistance. The polyfunctional ester is essential, and a coating may have a low hardness if its content is less than 50 wt%.

### Component (vi)

Component (vi) is a photopolymerization initiator. Suitable photopolymerization initiators include alkylphenones such as 2,2-dimethoxy-1,2-diphenylethan-1-one, 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, and methyl phenylglyoxylate;
aminoalkylphenones such as 2-methyl-1-(4-methylthiophenyl)-2-morpholinopropan-1-one, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-butanone; and
phosphine oxides such as 2,4,6-trimethylbenzoyldiphenylphosphine oxide and bis(2,4,6-trimethylbenzoyl)phenylphosphine oxide. Besides, any of curing catalysts commonly used in acrylic coating compositions may be used.

### Component (vii)

Component (vii) is a solvent. Suitable solvents include hydrocarbons of 5 to 30 carbon atoms such as pentane, hexane, heptane, octane, nonane, decane, undecane, dodecane, tridecane, tetradecane, pentadecane, hexadecane, heptadecane, octadecane, nonadecane, icosane, docosane, tricosane, tetracosane, pentacosane, hexacosane, heptacosane, octacosane, nonacosane, triacontane, benzene, toluene, o-xylene, m-xylene, p-xylene, and mixtures of two or more of the foregoing, known as petroleum ether, kerosine, ligroin, and nujol;
mono- to polyhydric alcohols such as methanol, ethanol, 1-propanol, 2-propanol, cyclopentanol, ethylene glycol, propylene glycol, β-thiadiglycol, butylene glycol, and glycerol;
ethers such as diethyl ether, dipropyl ether, cyclopentyl methyl ether, ethylene glycol dimethyl ether, diethylene glycol dimethyl ether,
triethylene glycol dimethyl ether,
ethylene glycol monomethyl ether,
ethylene glycol monoethyl ether,
ethylene glycol monopropyl ether,
ethylene glycol monobutyl ether,
propylene glycol monomethyl ether,
propylene glycol monoethyl ether,
propylene glycol monopropyl ether,
propylene glycol monobutyl ether,
butylene glycol monomethyl ether,
butylene glycol monoethyl ether,
butylene glycol monopropyl ether, and
butylene glycol monobutyl ether;
esters such as methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutyrate, propylene glycol diacetate, propylene glycol dipropionate, propylene glycol dibutyrate, ethylene glycol methyl ether acetate, propylene glycol methyl ether acetate, butylene glycol monomethyl ether acetate, ethylene glycol ethyl ether acetate, propylene glycol ethyl ether acetate, and butylene glycol monoethyl ether acetate;
ketones such as acetone, diacetone alcohol, diethyl ketone, methyl ethyl ketone, methyl isobutyl ketone, methyl n-butyl ketone, dibutyl ketone, cyclopentanone, cyclohexanone, cycloheptanone, and cyclooctanone;
amides such as dimethylformamide, dimethylacetamide, tetraacetylethylenediamide, tetraacetylhexamethylenetetramide, and N,N-dimethylhexamethylenediamine diacetate; and water, which may be used alone or in admixture.

The solvent as component (vii) is used in such an amount that the composition may have a solid content of preferably 5 to 70%, more preferably 10 to 60%, and even more preferably 20 to 50% by weight. If the solid content of the composition is less than 5 wt%, a coating may become too thin to provide weather resistance. If the solid content of the composition exceeds 70 wt%, a coating may have defects such as streaks in its outer appearance. As used herein, the solid content (wt%) of a composition refers to, when a composition having a unit weight is forcedly evaporated to dryness, a percentage of the weight of the residue divided by the unit weight. The residue after forced evaporation to dryness has the same meaning as a film-forming material after coating and curing. The solvent may be intentionally added to the composition in its preparation process or added in the steps of providing components (i) to (iv) and (vi) so that the solvent may be introduced into the composition in a carry-over or concomitant manner. Sometimes, one or more components (i) to (iv) and (vi) may have been diluted with the solvent when the component alone is difficult to handle because of a high viscosity, or for the purpose of providing storage stability or for the purpose of maintaining particle size or other physical properties. In such a case, the composition must be prepared while taking into account that a certain component(s) contains an amount of solvent, i.e., component (vii).

### Component (viii)

Component (viii) is at least one microparticulate inorganic oxide selected from the group consisting of silicon oxide, cerium oxide and zinc oxide while it is formulated into the composition if desired. Sometimes, it is necessary to blend component (viii) for the purpose of additionally reinforcing film physical properties. For example, silicon oxide is blended for the purpose of further improving the mar resistance of a cured coating alone. Cerium oxide or zinc oxide is blended for the purpose of improving the light absorptivity in the near-UV region.

The inorganic oxide particles as component (viii) should preferably have a volume basis 50% cumulative distribution diameter (D₅₀) of 1 to 100 nm, more preferably 5 to 50 nm, and even more preferably 10 to 30 nm, as measured by the dynamic light scattering method. Particles with a D₅₀ of less than 1 nm are low in dispersion stability whereas particles with a D₅₀ in excess of 100 nm may detract from transparency.

### Component (ix)

Optionally, the composition further comprises component (ix) which is a UV absorber and/or UV stabilizer. Component (ix) is a UV absorber and/or stabilizer which is classified to outside components (i), (ii), (iii), (v), and (viii). A monomer to constitute vinyl base monomer unit B in component (i), when taken alone, is classified to component (ix). Those monomers having UV-absorbing properties, but containing an alkoxysilyl group may be classified to component (ii), but not to component (ix). A microparticulate inorganic oxide having UV-absorbing properties may be classified to component (iii) or (viii), but not to component (ix). Component (ix) is at least one monomer selected from benzophenones, benzotriazoles, distyrylketones, triazines, and hindered amines, which may be modified with a vinyl polymerizable group. The UV absorber or stabilizer modified with a vinyl polymerizable group is classified to component (ix) rather than component (v).

### Amounts of components

In the actinic energy radiation-curable acrylic silicone resin composition, the foregoing components are used in the following amounts. The amount of each component is expressed as the content of a neat component excluding solvent and described below relative to 100 parts by weight of component (i).

The amount of component (ii) is 100 to 400 parts, preferably 150 to 300 parts, and more preferably 180 to 280 parts by weight. With less than 100 pbw of component (ii), a cured coating may be whitened. With more than 400 pbw of component (ii), a cured coating is likely to crack on weathering.

The amount of component (iii) is 10 to 100 parts, preferably 15 to 80 parts, and more preferably 20 to 60 parts by weight. With more than 100 pbw of component (iii), a cured coating may be whitened. With less than 10 pbw of component (iii), a cured coating may be less weather resistant.

The amount of component (iv) is 5 to 50 parts, preferably 8 to 30 parts, and more preferably 10 to 20 parts by weight. If the amount of component (iv) is more than 50 pbw or less than 5 pbw, a cured coating may be less adherent to the organic resin substrate.

The amount of component (v) is 200 to 1,000 parts, preferably 300 to 800 parts, and more preferably 400 to 600 parts by weight. More than 1,000 pbw of component (v) may render a cured coating less weather resistant whereas less than 200 pbw of component (v) may provide insufficient curability.

Component (vi) is blended in an amount necessary to cure a coating. Although the amount necessary to cure may vary with a dose of actinic energy radiation, the amount of component (vi) is typically 10 to 400 parts, preferably 20 to 300 parts by weight per 100 parts by weight of component (i). After the composition is coated and cured to an organic resin substrate, whether or not a coating has cured may be detected by IR spectroscopy analysis. In the IR spectroscopy analysis, evaluation is preferably made by the degree of disappearance of absorption peaks observed specifically at 1,700 to 1,400 cm⁻¹, more specifically at 1,650 to 1,450 cm⁻¹ and assigned to the vinyl polymerizable group. Empirical coatings are cured while the dose of actinic energy radiation and the amount of component (vi) are independently varied, after which the cured coatings are analyzed for absorption in the specific absorption region. The degree of disappearance is saturated at the point of time when a certain dose and/or a certain amount of component (vi) is exceeded. This is the amount necessary to cure, as used herein. If the dose of actinic energy radiation is excessive, undesirably the organic resin substrate can be altered. If the amount of component (vi) is excessive, undesirably the cured coating may become brittle and/or yellowed.

Component (vii), which is a solvent, is used in such an amount that the composition may have a solid content of preferably 5 to 70%, more preferably 10 to 60%, and even more preferably 20 to 50% by weight. If the solid content of the composition is less than 5 wt%, a coating may become too thin to provide weather resistance. If the solid content of the composition exceeds 70 wt%, a coating may have defects such as streaks in its outer appearance. As used herein, the solid content (wt%) of a composition refers to, when a composition having a unit weight is forcedly evaporated to dryness, a percentage of the weight of the residue divided by the unit weight. The residue after forced evaporation to dryness has the same meaning as a film-forming material after coating and curing. The solvent may be intentionally added to the composition in its preparation process or added in the steps of providing components (i) to (iv) and (vi) so that the solvent may be introduced into the composition in a carry-over or concomitant manner. Sometimes, one or more components (i) to (iv) and (vi) may have been diluted with the solvent when the component alone is difficult to handle because of a high viscosity, or for the purpose of providing storage stability or for the purpose of maintaining particle size or other physical properties. In such a case, the composition must be prepared while taking into account that a certain component(s) contains an amount of solvent, i.e., component (vii).

In the embodiment wherein component (viii) is used, a part of component (iii) is preferably replaced by component (viii) without changing the preferred range of an amount of component (iii). Preferably, the replacement of component (iii) by component (viii) does not exceed 50%, more preferably 40%, and even more preferably 35% by weight. If the replacement exceeds 50 wt%, weather resistance may become poor.

In the embodiment wherein component (ix) is used, a part of component (v) is preferably replaced by component (ix) without changing the preferred range of an amount of component (v). Preferably, the replacement of component (v) by component (ix) does not exceed 20%, more preferably 15%, and even more preferably 10% by weight. If the replacement exceeds 20 wt%, adhesion to the organic resin substrate and mar resistance may be worsened.

### Method of preparing composition

The actinic energy radiation-curable acrylic silicone resin composition of the invention may be prepared by mixing the foregoing components (i) to (vii) and optionally components (viii) and (ix) in a standard way. In a preferred embodiment, when the hydrolytic condensate as component (ii) is formed from its precursor, component (iii) and/or (viii) is added as a dispersion to the precursor and subjected to (co)hydrolytic condensation at the same time as the precursor, thereby forming a composite product of component (ii) with component (iii) and/or (viii), which is used in the preparation of the composition. When the hydrolytic condensate as component (ii) is formed from its precursor, reaction water providing for hydrolysis and/or a reaction solvent providing a reaction field is generally used. In this embodiment, the reaction water may be replaced by a water-dispersed colloidal solution containing component (iii) and/or (viii). Also in this embodiment, the reaction solvent may be replaced by an organic solvent-dispersed colloidal solution containing component (iii) and/or (viii). The latter case using the organic solvent-dispersed colloidal solution is preferred in that the amount of reaction water added may be set independent of the amount of component (iii) and/or (viii) added.

### Coated article

The inventive composition may be coated and cured to an organic resin substrate to form a coated article. The cured coating has not only weather resistance, mar resistance, and tight adhesion to the organic resin substrate, but also a possibility to receive a hardcoat film in the form of an inorganic evaporated layer deposited thereon. The organic resin substrate used herein may be made of a single organic resin selected from among polycarbonate, polyethylene terephthalate, polyethylene, polypropylene, polyoxymethylene, polyacrylic, polyepoxy, polyphenol, polyether ether ketone, and silicone resins, or a composite of two or more resins (inclusive of a multilayer structure and polymer alloy). Inter alia, the polycarbonate resin is preferred. The thickness of the organic resin substrate is preferably 0.1 to 100 mm, more preferably 1 to 10 mm, and more preferably 4 to 8 mm. In a special application such as bulletproof glazing, substrates of about 1 to 10 mm are preferred. If the thickness of organic resin substrate is less than 0.1 mm, the weather resistance the substrate itself possesses is substantially degraded, or the substrate is substantially warped upon curing, or the substrate is degraded when a hardcoat film of inorganic evaporated layer is deposited. Although there is no need to impose the upper limit to the thickness of the organic resin substrate, typically the upper limit is about 100 mm in most cases. The thickness of the coating which is formed by coating and curing the inventive composition to the organic resin substrate is preferably 0.1 to 50 microns (µm), more preferably 1 to 30 µm, and more preferably 5 to 20 µm. A coating of thinner than 0.1 µm may provide insufficient weather resistance. If the thickness of a coating exceeds 50 µm, film physical properties including crack resistance may be degraded.

Preferably the coated article has improved weather resistance. Preferably weather resistance is cleared by both an actual test of examining by outdoor exposure of the coated article and an accelerated weathering test of examining under accelerated conditions. Specifically, the coated article should preferably have a level of weather resistance corresponding to 2 year exposure, more preferably 3 year exposure, and even more preferably exposure for 4 or more years. The actual exposure test is preferably conducted in a temperate, humid, sunshine climate. The accelerated weathering test is preferably conducted by estimating the amount of energy in the actual exposure test and using a commercial accelerated weatherometer. For example, evaluation may be made by using Eyesuper UV tester W-151 (Iwasaki Electric Co., Ltd.) as the weatherometer, exposing a coating to test conditions including UV light with an intensity of 1×10³ W/m², temperature 60°C, and humidity 50% RH, measuring a time taken until cracks develop in the coating, and computing an accumulative value. For example, when UV light with an intensity of 1×10³ W/m² is irradiated for 1 hour, the accumulative energy quantity is 1 kWh/m², which is equal to 3.6 megajoule per square meters (MJ/m²) according to the conversion rule of derived units. Preferably the article coated with the cured coating according to the invention undergoes neither cracking nor whitening nor yellowing and maintains aesthetic appearance even after exposure in an accumulative UV energy quantity of 300 MJ/m².

In the weathering test, any environment of test conditions may be selected. An accumulative UV energy quantity of 300 MJ/m² corresponds to outdoor exposure over about 2 years. The correlation of test conditions to outdoor exposure may be readily estimated. For example, an outdoor UV illuminance is 1×10¹ W/m², when measured at noon on fine Vernal Equinox Day at Matsuida, Annaka City, Gunma Pref., Japan, using a UV illuminometer (EYE UV illuminometer UVP365-1 by Iwasaki Electric Co., Ltd.). Assume that the annual average daily sunshine time is 12 hours, the accumulative illuminance is 12 (h/day) × 365 (day/year) × 2 (year) × 10 (W/m²) = 88 (kWh/m²) ≅ 300 (MJ/m²). When the facts that the outdoor environment depends on the latitude and weather, and the weathering test uses an artificial environment are taken into account, it is reasonable that an approximation of 300 MJ/m² corresponds to outdoor exposure over 2 years. The test conditions may be changed depending on a particular environment where the cured coating is used.

Also preferably the coated article has improved mar resistance. An index of mar resistance is a delta haze value (ΔHz) in the Taber abrasion test. Specifically, a ΔHz value is determined according to ASTM D1044 by mounting a Taber abrasion tester with abrasion wheels CS-10F, measuring the haze after 500 rounds under a load of 500 g, and calculating a difference (ΔHz) between haze values before and after the test. The coating with a thickness of up to 5 µm preferably has ΔHz of up to 15, more preferably up to 13, and even more preferably up to 10.

Also preferably, the coated article is improved in the adhesion between the organic resin substrate and the cured coating. An index of adhesion is evaluated by a cross-hatch adhesion test according to JIS K5400, specifically by scribing a coating with a razor along 6 longitudinal and 6 transverse lines at a spacing of 2 mm to define 25 square sections, tightly attaching adhesive tape (Cellotape® by Nichiban Co., Ltd.), and rapidly pulling back the adhesive tape at an angle of 90°. The number (X) of sections remaining intact (not peeled) is expressed as X/25. As the number (X) of remaining sections is closer to 25, the sample is better in adhesion. An index of water-proof adhesion is available when the coated article is immersed in boiling water at 100°C for 2 hours prior to a cross-hatch adhesion test as above.

Also preferably, the coated article has improved transparency. An index of transparency is the haze of a coating. In general, the haze increases as the coating becomes thicker. The coating having a thickness of up to 5 µm preferably meets a haze of up to 2.0, more preferably up to 1.5, and even more preferably up to 1.0. The haze is measured by a haze meter NDH2000 (Nippon Denshoku Industries Co., Ltd.).

### Manufacture of coated article

The coated article is preferably manufactured by a method comprising the steps of:
(a) coating at least one surface of the organic resin substrate with the acrylic silicone resin composition to form a wet coated article,
(b) heat treating the wet coated article, and
(c) irradiating the heat treated article with actinic-energy radiation to cure the composition to form the coated article.

In the coating step (a), the inventive composition is applied to the organic resin substrate by a technique selected from flow coating, dip coating, bar coating, spray coating, comma coating, brush coating, roll coating, and calender coating, and a combination thereof. Inter alia, flow coating is preferred. The coating step may be followed by a leveling step, that is, the wet coating is kept stationary so that the coating surface may level out.

In the heat treating step (b), the wet coating is heat treated at a temperature below the heat resisting temperature of the substrate, specifically at a temperature of 50 to 150°C, more preferably 60 to 120°C, and even more preferably 70 to 100°C, for a time of preferably 1 to 10 minutes, more preferably 3 to 5 minutes. A heating time of more than 10 minutes may cause the coating to have an orange peel surface whereas a heating time of less than 1 minute is insufficient for adhesion.

In the curing step (c), the heat treated article is irradiated with actinic-energy radiation preferably selected from UV, IR, microwave, electron beam, and other radiation, more preferably UV, at a temperature below the heat resisting temperature of the substrate. The dose of UV necessary for cure is preferably 300 to 2,000 mJ/cm², more preferably 500 to 1800 mJ/cm². A dose of less than 300 mJ/cm² may lead to under-cure whereas a dose in excess of 2,000 mJ/cm² may cause yellowing or side effects to the coating or substrate. The curing step is preferably carried out in an atmosphere having an oxygen concentration of 100 ppm to 20% by weight, more preferably 500 ppm to 1% by weight. An oxygen concentration of more than 20 wt% may cause cure faults whereas reducing an oxygen concentration below 100 ppm is industrially disadvantageous.

### Hardcoat film of inorganic evaporated layer

Preferably the coated article has a possibility to receive a hardcoat film, especially in the form of an inorganic evaporated layer deposited thereon, for imparting more mar resistance or the like. The inorganic evaporated layer is not particularly limited as long as it is formed by a dry film-forming method. For example, it is a layer composed mainly of at least one metal selected from Si, Ti, Zn, Al, Ga, In, Ce, Bi, Sb, B, Zr, Sn, and Ta, or an oxide, nitride or sulfide of such metal. Also acceptable are diamond-like carbon film layers having a high hardness and insulation. The method of depositing the inorganic evaporated layer is not particularly limited as long as it is a dry film-forming method. Suitable dry film-forming methods include physical vapor deposition methods such as resistance heating evaporation, EB evaporation, molecular beam epitaxy, ion beam deposition, ion plating, and sputtering, and chemical vapor deposition (CVD) methods such as thermal CVD, plasma-enhanced CVD, photo-CVD, epitaxial CVD, atomic layer CVD, and cat-CVD. The thickness of the inorganic evaporated layer is preferably 0.1 to 10 µm.

### EXAMPLES

Examples of the invention are given below by way of illustration and not by way of limitation. In Examples, all parts and percentages are by weight unless otherwise indicated. Mw is a weight average molecular weight as measured by gel permeation chromatography (GPC) versus polystyrene standards. D₅₀ is a volume basis 50% cumulative distribution diameter of microparticles as measured by the dynamic light scattering method.

### Synthesis Example 1

### Synthesis of component (i): polymer product (i-EX1)

A 2-L flask equipped with a stirrer, condenser, dropping funnel and thermometer was charged with 33.7 g of diacetone alcohol, which was heated at 80°C in a nitrogen stream. There were previously prepared a monomer mixture of 20 g of γ-methacryloxypropyltrimethoxysilane (trade name KBM-503 by Shin-Etsu Chemical Co., Ltd.) (corresponding to monomer unit A, and providing a monomer unit A proportion of 20% based on the resulting polymer), 15 g of 2-[2'-hydroxy-5'-(2-methacryloxyethyl)phenyl]-2H-benzotriazole (trade name RUVA-93 by Otsuka Chemical Co., Ltd.) (corresponding to monomer unit B, and providing a monomer unit B proportion of 15% based on the resulting polymer), 60 g of methyl methacrylate (MMA) and 5 g of glycidyl methacrylate (GMA) (corresponding to monomer unit C, and providing a monomer unit C proportion of 65% based on the resulting polymer), and 140 g of diacetone alcohol; and an initiator solution of 0.5 g of 2,2'-azobis(2-methylbutyronitrile) in 40 g of diacetone alcohol. Portions of both the monomer mixture and the initiator solution were successively fed to the flask for effecting reaction at 80°C for 30 minutes, after which the remaining portions of both were added dropwise at 80-90°C over 20 minutes. The contents were stirred at 80-90°C for 5 hours, yielding a product (i-EX1). Product (i-EX1) was a diacetone alcohol solution containing 40 wt% of polymer component (i). The polymer solution had a viscosity of 5 Pa·s, and polymer component (i) had a Mw of 6×10⁴.

### Synthesis Example 2

### Synthesis of component (i): polymer product (i-EX2)

A 2-L flask equipped with a stirrer, condenser, dropping funnel and thermometer was charged with 33.7 g of diacetone alcohol, which was heated at 80°C in a nitrogen stream. There were previously prepared a monomer mixture of 15 g of γ-methacryloxypropyltrimethoxysilane (KBM-503) (corresponding to monomer unit A, and providing a monomer unit A proportion of 15% based on the resulting polymer), 20 g of 2-[2'-hydroxy-5'-(2-methacryloxyethyl)phenyl]-2H-benzotriazole (RUVA-93) (corresponding to monomer unit B, and providing a monomer unit B proportion of 20% based on the resulting polymer), 55 g of methyl methacrylate (MMA) and 10 g of glycidyl methacrylate (GMA) (corresponding to monomer unit C, and providing a monomer unit C proportion of 65% based on the resulting polymer), and 140 g of diacetone alcohol; and an initiator solution of 0.5 g of 2,2'-azobis(2-methylbutyronitrile) in 40 g of diacetone alcohol. Portions of both the monomer mixture and the initiator solution were successively fed to the flask for effecting reaction at 80°C for 30 minutes, after which the remaining portions of both were added dropwise at 80-90°C over 20 minutes. The contents were stirred at 80-90°C for 5 hours, yielding a product (i-EX2). Product (i-EX2) was obtained as a diacetone alcohol solution containing 40 wt% of polymer component (i). The polymer solution had a viscosity of 5 Pa·s, and polymer component (i) had a Mw of 6×10⁴.

### Synthesis Example 3

### Synthesis of composite of components (ii) and (iii): product (ii-EX3)

A 1-L four-necked flask equipped with a stirrer, condenser, dropping funnel and thermometer was charged with a mixture of component (ii) precursors: 70 g of γ-acryloyloxypropyltrimethoxysilane (trade name KBM-5103 by Shin-Etsu Chemical Co., Ltd.), 20 g of γ-acryloyloxypropylmethyldimethoxysilane (trade name KBM-5102 by Shin-Etsu Chemical Co., Ltd.), 110 g of tetraethoxysilane (trade name KBE-04 by Shin-Etsu Chemical Co., Ltd.), and 10 g of an ion exchange resin (trade name Amberlite 200CT(H)-AG by Organo Corp.) as hydrolytic catalyst, and cooled to an internal temperature of 10°C. To the flask, an aqueous colloidal solution of component (iii) was added dropwise from the dropping funnel over 1 hour. The aqueous colloidal solution of component (iii) was a dispersion of 20 g of core/shell type tetragonal titanium oxide solid-solution microparticles in 56 g of water and 120 g of ethanol, the core/shell type tetragonal titanium oxide solid-solution microparticles having a D₅₀ size of 20 nm, the core/shell type microparticles each consisting of a core of rutile type titanium oxide having 1 mol% manganese and 5 mol% tin incorporated in solid solution and a shell of silicon oxide around the core, the cores and shells accounting for 75% and 25% based on the total weight of the core/shell type microparticles, respectively. With stirring, the flask contents were aged at 25°C for 1 hour. Then 100 g of cyclopentanol was added to the flask, which was heated in an oil bath at 100°C. Concomitantly with heating, 155 g of a low boiling fraction was distilled off. At this point, the flask internal temperature was 87°C. The flask contents were filtered to remove the ion exchange resin. To the filtrate were added 60 g of diacetone alcohol, 60 g of cyclopentanol, 0.2 g of polyether-modified silicone oil (trade name KP-341 by Shin-Etsu Chemical Co., Ltd.) as leveling agent, and 0.7 g of tris(acetylacetonato)aluminum(III). The contents were stirred at 25°C for a further 1 hour, obtaining a product (ii-EX3). Product (ii-EX3) was an alcohol solution containing 28 wt% of the cohydrolytic composite of components (ii) and (iii), the alcohol consisting essentially of cyclopentanol, diacetone alcohol, ethanol and methanol. This solution had a viscosity of 10 mm²/s, and component (ii) had a Mw of 2×10³.

### Synthesis Example 4

### Synthesis of composite of components (ii) and (iii): product (ii-EX4)

Product (ii-EX4) was obtained by the same procedure as in Synthesis Example 3 aside from using a colloidal solution containing 30 g of component (iii) instead of 20 g of component (iii). Product (ii-EX4) was an alcohol solution containing 29 wt% of the cohydrolytic composite of components (ii) and (iii), the alcohol consisting essentially of cyclopentanol, diacetone alcohol, ethanol and methanol. This solution had a viscosity of 10 mm²/s, and component (ii) had a Mw of 2×10³.

### Synthesis Example 5

### Synthesis of composite of components (ii) and (iii): product (ii-EX5)

Product (ii-EX5) was obtained by the same procedure as in Synthesis Example 3 aside from using 65 g of γ-acryloyloxypropyltrimethoxysilane (KBM-5103) and 5 g of [2-hydroxy-4-(3-(trimethoxysilyl)propoxy)]benzophenone (abbreviated as UVASilane in Table 1) instead of 70 g of γ-acryloyloxypropyltrimethoxysilane (KBM-5103). Product (ii-EX5) was an alcohol solution containing 28 wt% of the cohydrolytic composite of components (ii) and (iii), the alcohol consisting essentially of cyclopentanol, diacetone alcohol, ethanol and methanol. This solution had a viscosity of 10 mm²/s, and component (ii) had a Mw of 2×10³.

### Synthesis Example 6

### Synthesis of composite of components (ii), (iii) and (viii): product (ii-EX6)

Product (ii-EX6) was obtained by the same procedure as in Synthesis Example 3 aside from using a colloidal solution containing 18 g of component (iii) instead of 20 g of component (iii) and adding 2 g of silica sol (trade name IPA-ST by Nissan Chemical Industries, Ltd., particle size 10-20 nm) thereto. Product (ii-EX6) was an alcohol solution containing 28 wt% of the cohydrolytic composite of components (ii), (iii) and (viii), the alcohol consisting essentially of cyclopentanol, diacetone alcohol, ethanol and methanol. This solution had a viscosity of 10 mm²/s, and component (ii) had a Mw of 2×10³.

### Synthesis Example 7

### Synthesis of composite of components (ii), (iii) and (viii): product (ii-EX7)

Product (ii-EX7) was obtained by the same procedure as in Synthesis Example 3 aside from using a colloidal solution containing 18 g of component (iii) instead of 20 g of component (iii) and adding 2 g of ceria sol (trade name Nanouse CE-T20B by Nissan Chemical Industries, Ltd., particle size 10-20 nm) thereto. Product (ii-EX7) was an alcohol solution containing 28 wt% of the cohydrolytic composite of components (ii), (iii) and (viii), the alcohol consisting essentially of cyclopentanol, diacetone alcohol, ethanol and methanol. This solution had a viscosity of 10 mm²/s, and component (ii) had a Mw of 2×10³.

### Synthesis Example 8

### Synthesis of composite of components (ii), (iii) and (viii): product (ii-EX8)

Product (ii-EX8) was obtained by the same procedure as in Synthesis Example 3 aside from using a colloidal solution containing 18 g of component (iii) instead of 20 g of component (iii) and adding 2 g of ZnO sol (trade name RTTDNB-E34 by CIK NanoTek Co., Ltd., particle size 20-60 nm) thereto. Product (ii-EX8) was an alcohol solution containing 28 wt% of the cohydrolytic composite of components (ii), (iii) and (viii), the alcohol consisting essentially of cyclopentanol, diacetone alcohol, ethanol and methanol. This solution had a viscosity of 10 mm²/s, and component (ii) had a Mw of 2×10³.

### Comparative Synthesis Example 1

### Synthesis of comparative component (i): polymer product (i-R1)

A 2-L flask equipped with a stirrer, condenser, dropping funnel and thermometer was charged with 33.7 g of diacetone alcohol, which was heated at 80°C in a nitrogen stream. There were previously prepared a monomer mixture (free of monomer unit A) of 35 g of 2-[2'-hydroxy-5'-(2-methacryloxyethyl)phenyl]-2H-benzotriazole (RUVA-93) (corresponding to monomer unit B, and providing a monomer unit B proportion of 35% based on the resulting polymer), 60 g of methyl methacrylate (MMA) and 5 g of glycidyl methacrylate (GMA) (corresponding to monomer unit C, and providing a monomer unit C proportion of 65% based on the resulting polymer), and 140 g of diacetone alcohol; and an initiator solution of 0.5 g of 2,2'-azobis(2-methylbutyronitrile) in 40 g of diacetone alcohol. Portions of both the monomer mixture and the initiator solution were successively fed to the flask for effecting reaction at 80°C for 30 minutes, after which the remaining portions of both were added dropwise at 80-90°C over 20 minutes. The contents were stirred at 80-90°C for 5 hours, yielding a product (i-R1). Product (i-R1) was a diacetone alcohol solution containing 40 wt% of polymer component. The polymer solution had a viscosity of 5 Pa·s, and the polymer component had a Mw of 6×10⁴.

### Comparative Synthesis Example 2

### Synthesis of comparative component (i): polymer product (i-R2)

A 2-L flask equipped with a stirrer, condenser, dropping funnel and thermometer was charged with 33.7 g of diacetone alcohol, which was heated at 80°C in a nitrogen stream. There were previously prepared a monomer mixture (free of monomer unit B) of 35 g of γ-methacryloxypropyltrimethoxysilane (KBM-503) (corresponding to monomer unit A, and providing a monomer unit A proportion of 35% based on the resulting polymer), 60 g of methyl methacrylate (MMA) and 5 g of glycidyl methacrylate (GMA) (corresponding to monomer unit C, and providing a monomer unit C proportion of 65% based on the resulting polymer), and 140 g of diacetone alcohol; and an initiator solution of 0.5 g of 2,2'-azobis(2-methylbutyronitrile) in 40 g of diacetone alcohol. Portions of both the monomer mixture and the initiator solution were successively fed to the flask for effecting reaction at 80°C for 30 minutes, after which the remaining portions of both were added dropwise at 80-90°C over 20 minutes. The contents were stirred at 80-90°C for 5 hours, yielding a product (i-R2). Product (i-R2) was a diacetone alcohol solution containing 40 wt% of polymer component. The polymer solution had a viscosity of 5 Pa·s, and the polymer component had a Mw of 6×10⁴.

### Comparative Synthesis Example 3

### Synthesis of comparative component (i): polymer product (i-R3)

A 2-L flask equipped with a stirrer, condenser, dropping funnel and thermometer was charged with 33.7 g of diacetone alcohol, which was heated at 80°C in a nitrogen stream. There were previously prepared a monomer mixture (free of monomer unit C) of 50 g of γ-methacryloxypropyltrimethoxysilane (KBM-503) (corresponding to monomer unit A, and providing a monomer unit A proportion of 50% based on the resulting polymer), 50 g of 2-[2'-hydroxy-5'-(2-methacryloxyethyl)phenyl]-2H-benzotriazole (RUVA-93) (corresponding to monomer unit B, and providing a monomer unit B proportion of 50% based on the resulting polymer), and 140 g of diacetone alcohol; and an initiator solution of 0.5 g of 2,2'-azobis(2-methylbutyronitrile) in 40 g of diacetone alcohol. Portions of both the monomer mixture and the initiator solution were successively fed to the flask for effecting reaction at 80°C for 30 minutes, after which the remaining portions of both were added dropwise at 80-90°C over 20 minutes. The contents were stirred at 80-90°C for 5 hours, yielding a product (i-R3). Product (i-R3) was a diacetone alcohol solution containing 40 wt% of polymer component. The polymer solution had a viscosity of 5 Pa·s, and the polymer component had a Mw of 6×10⁴.

### Comparative Synthesis Example 4

### Synthesis of comparative component (i): polymer product (i-R4)

A 2-L flask equipped with a stirrer, condenser, dropping funnel and thermometer was charged with 33.7 g of diacetone alcohol, which was heated at 80°C in a nitrogen stream. There were previously prepared a monomer mixture of 80 g of γ-methacryloxypropyltrimethoxysilane (KBM-503) (corresponding to monomer unit A, and providing a monomer unit A proportion of 80% based on the resulting polymer), 15 g of 2-[2'-hydroxy-5'-(2-methacryloxyethyl)phenyl]-2H-benzotriazole (RUVA-93) (corresponding to monomer unit B, and providing a monomer unit B proportion of 15% based on the resulting polymer), 5 g of methyl methacrylate (MMA) (corresponding to monomer unit C, and providing a monomer unit C proportion of 5% based on the resulting polymer), and 140 g of diacetone alcohol; and an initiator solution of 0.5 g of 2,2'-azobis(2-methylbutyronitrile) in 40 g of diacetone alcohol. Portions of both the monomer mixture and the initiator solution were successively fed to the flask for effecting reaction at 80°C for 30 minutes, after which the remaining portions of both were added dropwise at 80-90°C over 20 minutes. The contents were stirred at 80-90°C for 5 hours, yielding a product (i-R4). Product (i-R4) was a diacetone alcohol solution containing 40 wt% of polymer component. The polymer solution had a viscosity of 5 Pa·s, and the polymer component had a Mw of 6×10⁴.

### Comparative Synthesis Example 5

### Synthesis of comparative component (i): polymer product (i-R5)

A 2-L flask equipped with a stirrer, condenser, dropping funnel and thermometer was charged with 33.7 g of diacetone alcohol, which was heated at 80°C in a nitrogen stream. There were previously prepared a monomer mixture of 1 g of γ-methacryloxypropyltrimethoxysilane (KBM-503) (corresponding to monomer unit A, and providing a monomer unit A proportion of 1% based on the resulting polymer), 1 g of 2-[2'-hydroxy-5'-(2-methacryloxyethyl)phenyl]-2H-benzotriazole (RUVA-93) (corresponding to monomer unit B, and providing a monomer unit B proportion of 1% based on the resulting polymer), 98 g of methyl methacrylate (MMA) (corresponding to monomer unit C, and providing a monomer unit C proportion of 98% based on the resulting polymer), and 140 g of diacetone alcohol; and an initiator solution of 0.5 g of 2,2'-azobis(2-methylbutyronitrile) in 40 g of diacetone alcohol. Portions of both the monomer mixture and the initiator solution were successively fed to the flask for effecting reaction at 80°C for 30 minutes, after which the remaining portions of both were added dropwise at 80-90°C over 20 minutes. The contents were stirred at 80-90°C for 5 hours, yielding a product (i-R5). Product (i-R5) was a diacetone alcohol solution containing 40 wt% of polymer component. The polymer solution had a viscosity of 4 Pa·s, and the polymer component had a Mw of 6×10⁴.

### Comparative Synthesis Example 6

### Synthesis of composite of comparative component (ii) and component (iii): product (ii-R6)

A 1-L four-necked flask equipped with a stirrer, condenser, dropping funnel and thermometer was charged with a mixture of silicon compounds: 20 g of trimethylmethoxysilane (trade name KBM-31 by Shin-Etsu Chemical Co., Ltd.) and 180 g of tetraethoxysilane (KBE-04), and 10 g of an ion exchange resin (Amberlite 200CT(H)-AG) as hydrolytic catalyst, and cooled to an internal temperature of 10°C. To the flask, an aqueous colloidal solution of component (iii) was added dropwise from the dropping funnel over 1 hour. The aqueous colloidal solution of component (iii) was a dispersion of 20 g of core/shell type tetragonal titanium oxide solid-solution microparticles in 56 g of water and 120 g of ethanol, the core/shell type tetragonal titanium oxide solid-solution microparticles having a D₅₀ size of 20 nm, the core/shell type microparticles each consisting of a core of rutile type titanium oxide having 1 mol% manganese and 5 mol% tin incorporated in solid solution and a shell of silicon oxide around the core, the cores and shells accounting for 75% and 25% based on the total weight of the core/shell type microparticles, respectively. With stirring, the flask contents were aged at 25°C for 1 hour. Then 100 g of cyclopentanol was added to the flask, which was heated in an oil bath at 100°C. Concomitantly with heating, 155 g of a low boiling fraction was distilled off. At this point, the flask internal temperature was 87°C. The flask contents were filtered to remove the ion exchange resin. To the filtrate were added 60 g of diacetone alcohol, 60 g of cyclopentanol, 0.2 g of polyether-modified silicone oil (KP-341) as leveling agent, and 0.7 g of tris(acetylacetonato)aluminum(III). The contents were stirred at 25°C for a further 1 hour, obtaining a product (ii-R6). Product (ii-R6) was a gel.

### Comparative Synthesis Example 7

### Synthesis of composite of comparative component (ii) and component (iii): product (ii-R7)

A 1-L four-necked flask equipped with a stirrer, condenser, dropping funnel and thermometer was charged with a mixture of silicon compounds: 20 g of trimethylmethoxysilane (KBM-31) and 180 g of γ-acryloyloxypropylmethyldimethoxysilane (KBE-04), and 10 g of an ion exchange resin (Amberlite 200CT(H)-AG) as hydrolytic catalyst, and cooled to an internal temperature of 10°C. To the flask, an aqueous colloidal solution of component (iii) was added dropwise from the dropping funnel over 1 hour. The aqueous colloidal solution of component (iii) was a dispersion of 20 g of core/shell type tetragonal titanium oxide solid-solution microparticles in 56 g of water and 120 g of ethanol, the core/shell type tetragonal titanium oxide solid-solution microparticles having a D₅₀ size of 20 nm, the core/shell type microparticles each consisting of a core of rutile type titanium oxide having 1 mol% manganese and 5 mol% tin incorporated in solid solution and a shell of silicon oxide around the core, the cores and shells accounting for 75% and 25% based on the total weight of the core/shell type microparticles, respectively. With stirring, the flask contents were aged at 25°C for 1 hour. Then 100 g of cyclopentanol was added to the flask, which was heated in an oil bath at 100°C. Concomitantly with heating, 155 g of a low boiling fraction was distilled off. At this point, the flask internal temperature was 87°C. The flask contents were filtered to remove the ion exchange resin. To the filtrate were added 60 g of diacetone alcohol, 60 g of cyclopentanol, 0.2 g of polyether-modified silicone oil (KP-341) as leveling agent, and 0.7 g of tris(acetylacetonato)aluminum(III). The contents were stirred at 25°C for a further 1 hour, obtaining a product (ii-R7). Product (ii-R7) was a white turbid oily mixture.

### Comparative Synthesis Example 8

### Synthesis of composite of component (ii) and comparative component (iii): product (ii-R8)

A 1-L four-necked flask equipped with a stirrer, condenser, dropping funnel and thermometer was charged with a mixture of component (ii) precursors: 70 g of γ-acryloyloxypropyltrimethoxysilane (KBM-5103), 20 g of γ-acryloyloxypropylmethyldimethoxysilane (KBM-5102), and 110 g of tetraethoxysilane (KBE-04), and 10 g of an ion exchange resin (Amberlite 200CT(H)-AG) as hydrolytic catalyst, and cooled to an internal temperature of 10°C. To the flask, an aqueous colloidal solution of non-component (iii) was added dropwise from the dropping funnel over 1 hour. The aqueous colloidal solution of non-component (iii) was a dispersion of 20 g of core/shell type tetragonal titanium oxide solid-solution microparticles in 56 g of water and 120 g of ethanol, the core/shell type tetragonal titanium oxide solid-solution microparticles having a D₅₀ size of 20 nm, the core/shell type microparticles each consisting of a core of rutile type titanium oxide having 1 mol% manganese incorporated in solid solution and a shell of silicon oxide around the core, the cores and shells accounting for 75% and 25% based on the total weight of the core/shell type microparticles, respectively. With stirring, the flask contents were aged at 25°C for 1 hour. Then 100 g of cyclopentanol was added to the flask, which was heated in an oil bath at 100°C. Concomitantly with heating, 155 g of a low boiling fraction was distilled off. At this point, the flask internal temperature was 87°C. The flask contents were filtered to remove the ion exchange resin. To the filtrate were added 60 g of diacetone alcohol, 60 g of cyclopentanol, 0.2 g of polyether-modified silicone oil (KP-341) as leveling agent, and 0.7 g of tris(acetylacetonato)aluminum(III). The contents were stirred at 25°C for a further 1 hour, obtaining a product (ii-R8). Product (ii-R8) was an alcohol solution containing 28 wt% of the cohydrolytic composite of component (ii) and non-component (iii), the alcohol consisting essentially of cyclopentanol, diacetone alcohol, ethanol and methanol. This solution had a viscosity of 10 mm²/s, and component (ii) had a Mw of 2×10³.

### Comparative Synthesis Example 9

### Synthesis of composite of component (ii) and comparative component (iii): product (ii-R9)

A 1-L four-necked flask equipped with a stirrer, condenser, dropping funnel and thermometer was charged with a mixture of component (ii) precursors: 70 g of γ-acryloyloxypropyltrimethoxysilane (KBM-5103), 20 g of γ-acryloyloxypropylmethyldimethoxysilane (KBM-5102), and 110 g of tetraethoxysilane (KBE-04), and 10 g of an ion exchange resin (Amberlite 200CT(H)-AG) as hydrolytic catalyst, and cooled to an internal temperature of 10°C. To the flask, an aqueous colloidal solution of non-component (iii) was added dropwise from the dropping funnel over 1 hour. The aqueous colloidal solution of non-component (iii) was a dispersion of 20 g of core/shell type tetragonal titanium oxide solid-solution microparticles in 56 g of water and 120 g of ethanol, the core/shell type tetragonal titanium oxide solid-solution microparticles having a D₅₀ size of 20 nm, the core/shell type microparticles each consisting of a core of rutile type titanium oxide having 5 mol% tin incorporated in solid solution and a shell of silicon oxide around the core, the cores and shells accounting for 75% and 25% based on the total weight of the core/shell type microparticles, respectively. With stirring, the flask contents were aged at 25°C for 1 hour. Then 100 g of cyclopentanol was added to the flask, which was heated in an oil bath at 100°C. Concomitantly with heating, 155 g of a low boiling fraction was distilled off. At this point, the flask internal temperature was 87°C. The flask contents were filtered to remove the ion exchange resin. To the filtrate were added 60 g of diacetone alcohol, 60 g of cyclopentanol, 0.2 g of polyether-modified silicone oil (KP-341) as leveling agent, and 0.7 g of tris(acetylacetonato)aluminum(III). The contents were stirred at 25°C for a further 1 hour, obtaining a product (ii-R9). Product (ii-R9) was an alcohol solution containing 28 wt% of the cohydrolytic composite of component (ii) and non-component (iii), the alcohol consisting essentially of cyclopentanol, diacetone alcohol, ethanol and methanol. This solution had a viscosity of 10 mm²/s, and component (ii) had a Mw of 2×10³.

### Comparative Synthesis Example 10

### Synthesis of composite of component (ii) and comparative component (viii): product (ii-R10)

A 1-L four-necked flask equipped with a stirrer, condenser, dropping funnel and thermometer was charged with a mixture of component (ii) precursors: 70 g of γ-acryloyloxypropyltrimethoxysilane (KBM-5103), 20 g of γ-acryloyloxypropylmethyldimethoxysilane (KBM-5102), and 110 g of tetraethoxysilane (KBE-04), and 10 g of an ion exchange resin (Amberlite 200CT(H)-AG) as hydrolytic catalyst, and cooled to an internal temperature of 10°C. To the flask, an aqueous colloidal solution of component (viii) was added dropwise from the dropping funnel over 1 hour. The aqueous colloidal solution of component (viii) was a colloidal solution of 20 g of silica sol (trade name IPA-ST by Nissan Chemical Industries, Ltd.) in 56 g of water and 120 g of ethanol, the silica sol having a D₅₀ size of 10-20 nm. With stirring, the flask contents were aged at 25°C for 1 hour. Then 100 g of cyclopentanol was added to the flask, which was heated in an oil bath at 100°C. Concomitantly with heating, 155 g of a low boiling fraction was distilled off. At this point, the flask internal temperature was 87°C. The flask contents were filtered to remove the ion exchange resin. To the filtrate were added 60 g of diacetone alcohol, 60 g of cyclopentanol, 0.2 g of polyether-modified silicone oil (KP-341) as leveling agent, and 0.7 g of tris(acetylacetonato)aluminum(III). The contents were stirred at 25°C for a further 1 hour, obtaining a product (ii-R10). Product (ii-R10) was an alcohol solution containing 28 wt% of the cohydrolytic composite of component (ii) and comparative component (viii), the alcohol consisting essentially of cyclopentanol, diacetone alcohol, ethanol and methanol. This solution had a viscosity of 10 mm²/s, and component (ii) had a Mw of 2×10³.

The classification, sub-classification and amount of components in Synthesis Examples 1 to 8 and Comparative Synthesis Examples 1 to 10 are tabulated in Tables 1 and 2.

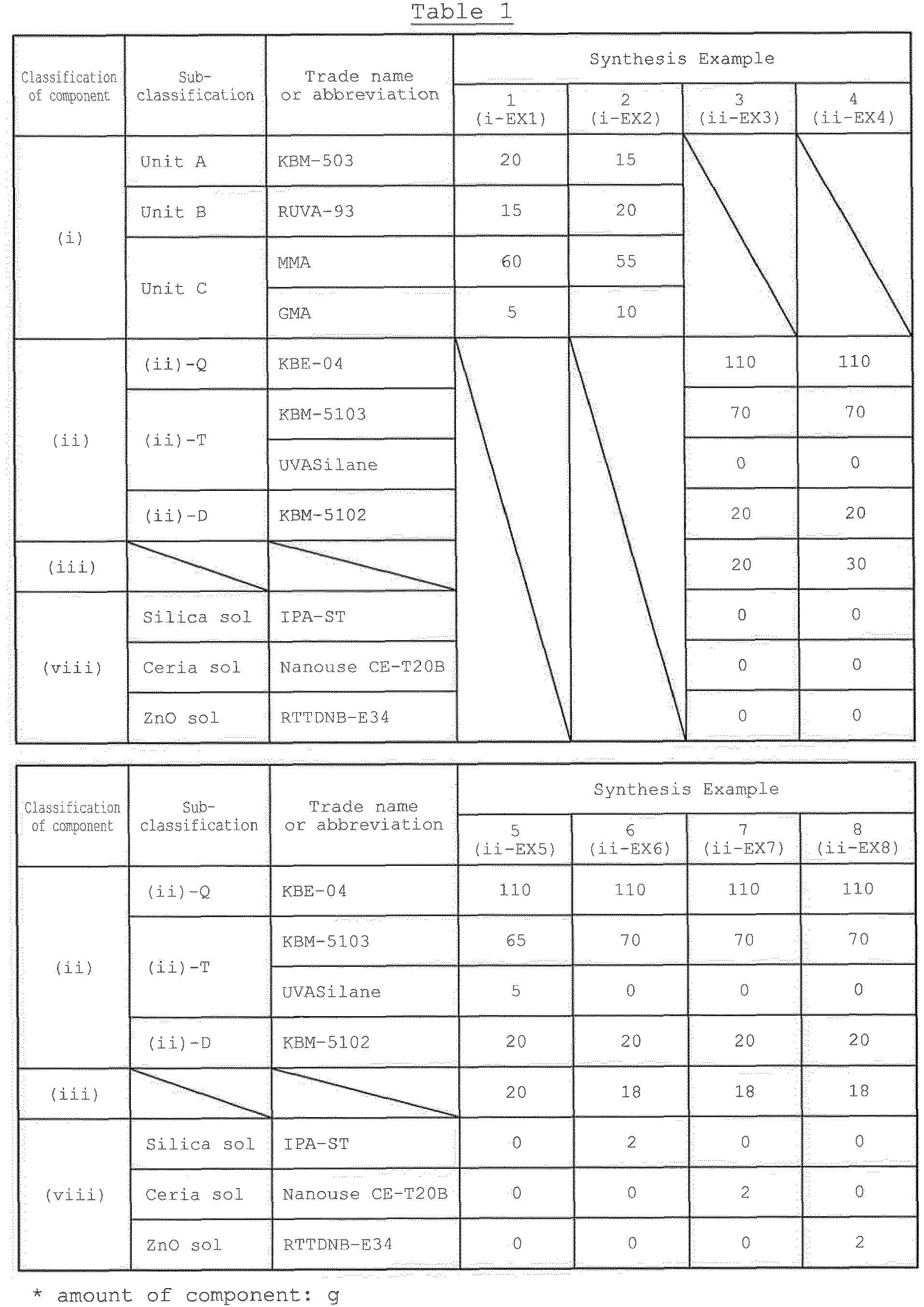

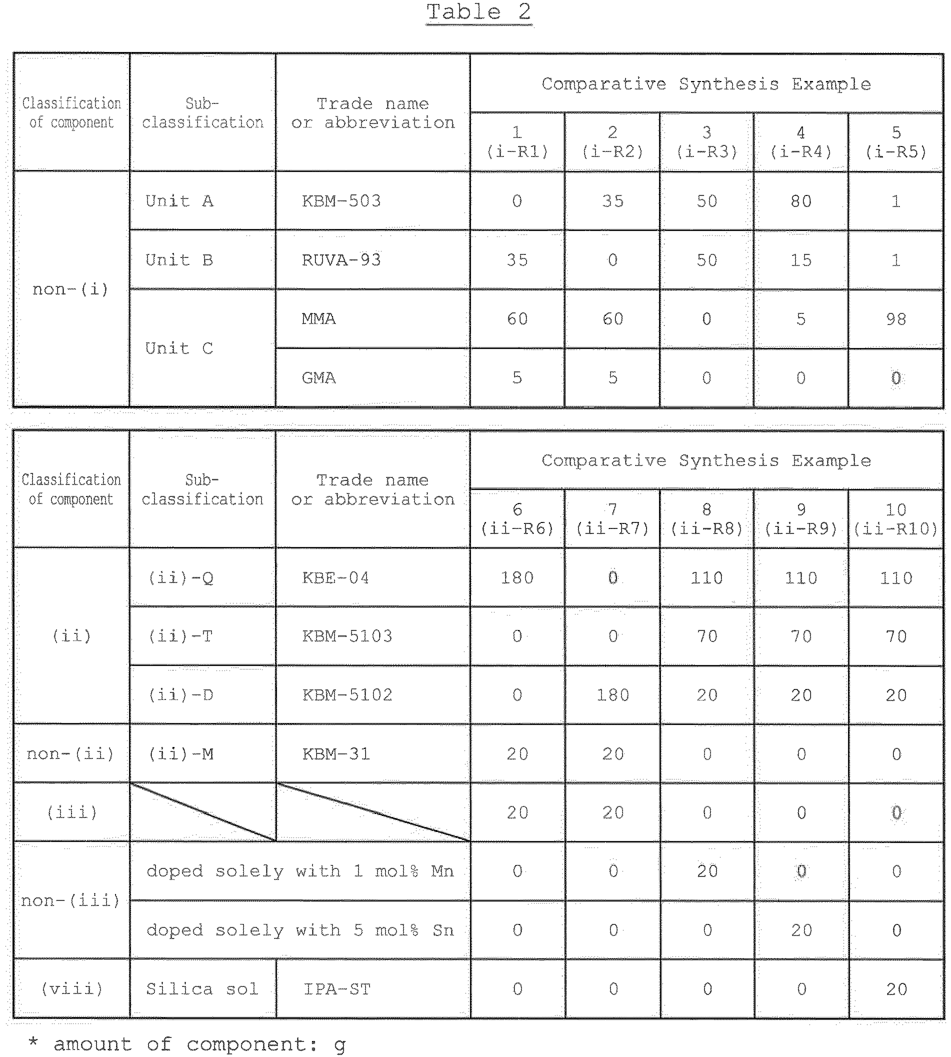

### Actinic energy radiation-curable acrylic silicone resin composition and preparation

### Example 1

In a brown plastic bottle, 250 parts of i-EX1, 928 parts of ii-EX3, 50 parts of Akurit 8UA-347 (Taisei Fine Chemical Co., Ltd.), 550 parts of trimethylolpropane triacrylate (TMPT-A), and 80 parts of 2-hydroxy-2-methyl-1-phenylpropan-1-one (SB-PI 703) were metered. An amount of cyclopentanol was added so that the resulting composition might have a solid concentration of 40 wt%. The contents were shaken and agitated. This composition was equivalent to the following formulation in weight ratio of components (i) through (vi) calculated as solids.

| | |
|---|---|
| (i) | 100 parts |
| (ii) | 220 parts |
| (iii) | 40 parts |
| (iv) | 15 parts |
| (v) | 550 parts |
| (vi) | 80 parts |

The formulation is also tabulated in Table 3.

### Example 2

As in Example 1, components were blended so as to meet the formulation of Example 2 in Table 3. Notably, the abbreviation DPHA stands for dipentaerythritol hexaacrylate.

### Example 3

As in Example 1, components were blended so as to meet the formulation of Example 3 in Table 3. Notably, the abbreviation HDDA stands for hexanediol diacrylate.

### Example 4

As in Example 1, components were blended so as to meet the formulation of Example 4 in Table 3.

### Example 5

As in Example 1, components were blended so as to meet the formulation of Example 5 in Table 3. Notably, the abbreviation LucirinTPO stands for 2,4,6-trimethylbenzoyl diphenylphosphine oxide.

### Example 6

As in Example 1, components were blended so as to meet the formulation of Example 6 in Table 3. Notably, RUVA-93 is a trade name for 2-[2'-hydroxy-5'-(2-methacryloxyethyl)-phenyl]-2H-benzotriazole.

### Example 7

As in Example 1, components were blended so as to meet the formulation of Example 7 in Table 3.

### Example 8

As in Example 1, components were blended so as to meet the formulation of Example 8 in Table 3.

### Example 9

As in Example 1, components were blended so as to meet the formulation of Example 9 in Table 3.

### Example 10

As in Example 1, components were blended so as to meet the formulation of Example 10 in Table 3.

### Example 11

A composition was prepared by blending components as in Example 1, further adding 2 parts of sol-gel silica having a D₅₀ size of 110 nm (trade name X-24-9163 by Shin-Etsu Chemical Co., Ltd.) to the blend, agitating and mixing the contents until uniform.

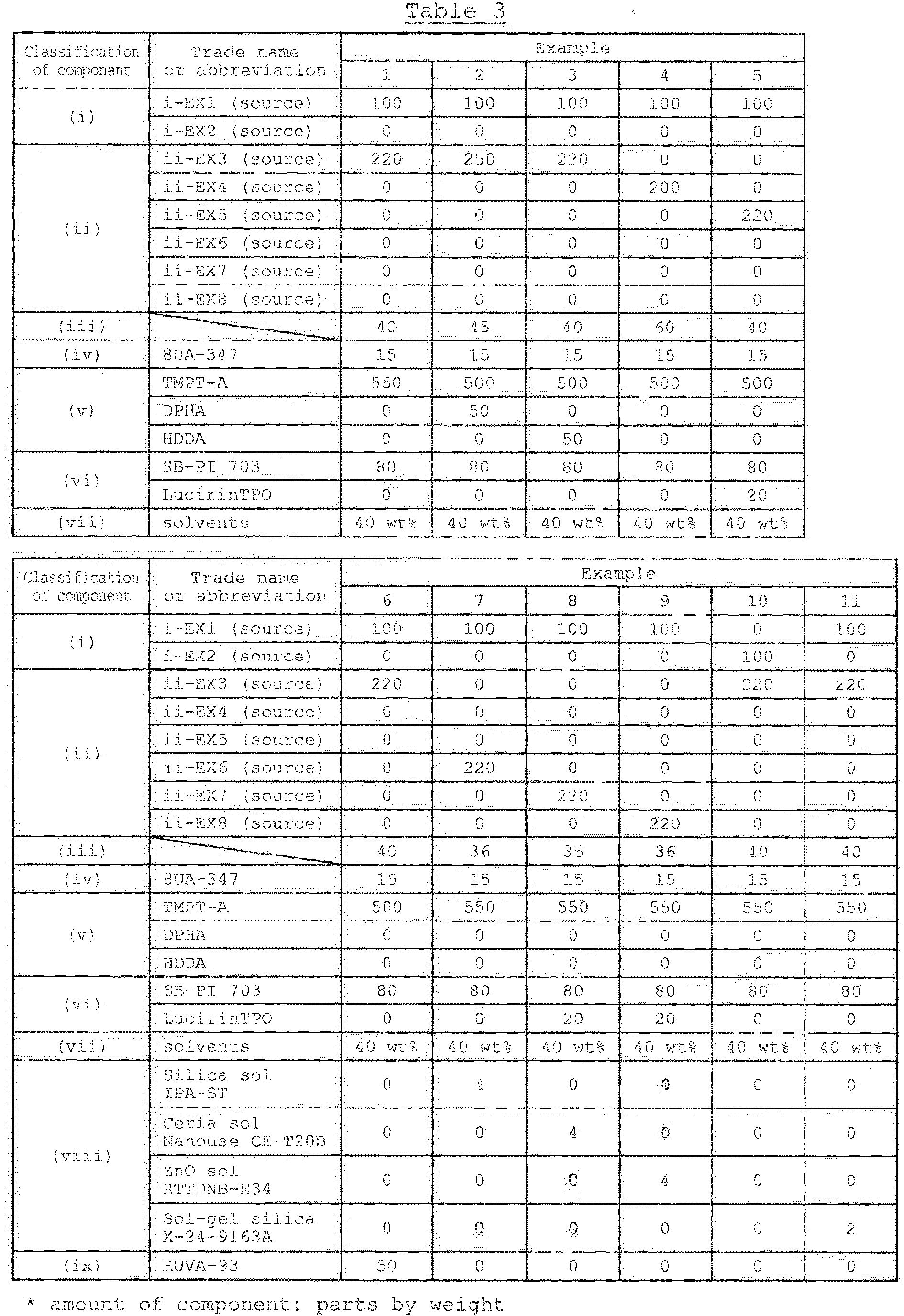

### Comparative Example 1

In a brown plastic bottle, 250 parts of i-R1, 928 parts of ii-EX3, 50 parts of Akurit 8UA-347 (Taisei Fine Chemical Co., Ltd.), 550 parts of trimethylolpropane triacrylate (TMPT-A), and 80 parts of 2-hydroxy-2-methyl-1-phenylpropan-1-one (SB-PI 703) were metered. An amount of cyclopentanol was added so that the resulting composition might have a solid concentration of 40 wt%. The contents were shaken and agitated. This composition was equivalent to the following formulation in weight ratio of non-component (i), components (ii) through (vi) calculated as solids.

| | |
|---|---|
| non-(i) | 100 parts |
| (ii) | 220 parts |
| (iii) | 40 parts |
| (iv) | 15 parts |
| (v) | 550 parts |
| (vi) | 80 parts |

The formulation is also tabulated in Table 4.

### Comparative Example 2

As in Comparative Example 1, components were blended so as to meet the formulation of Comparative Example 2 in Table 4.

### Comparative Example 3

As in Comparative Example 1, components were blended so as to meet the formulation of Comparative Example 3 in Table 4.

### Comparative Example 4

As in Comparative Example 1, components were blended so as to meet the formulation of Comparative Example 4 in Table 4.

### Comparative Example 5

As in Comparative Example 1, components were blended so as to meet the formulation of Comparative Example 5 in Table 4.

### Comparative Example 6

As in Comparative Example 1, components were blended so as to meet the formulation of Comparative Example 6 in Table 4.

### Comparative Example 7

As in Comparative Example 1, components were blended so as to meet the formulation of Comparative Example 7 in Table 4.

### Comparative Example 8

As in Comparative Example 1, components were blended so as to meet the formulation of Comparative Example 8 in Table 4.

### Comparative Example 9

As in Comparative Example 1, components were blended so as to meet the formulation of Comparative Example 9 in Table 4.

### Comparative Example 10

As in Comparative Example 1, components were blended so as to meet the formulation of Comparative Example 10 in Table 4.

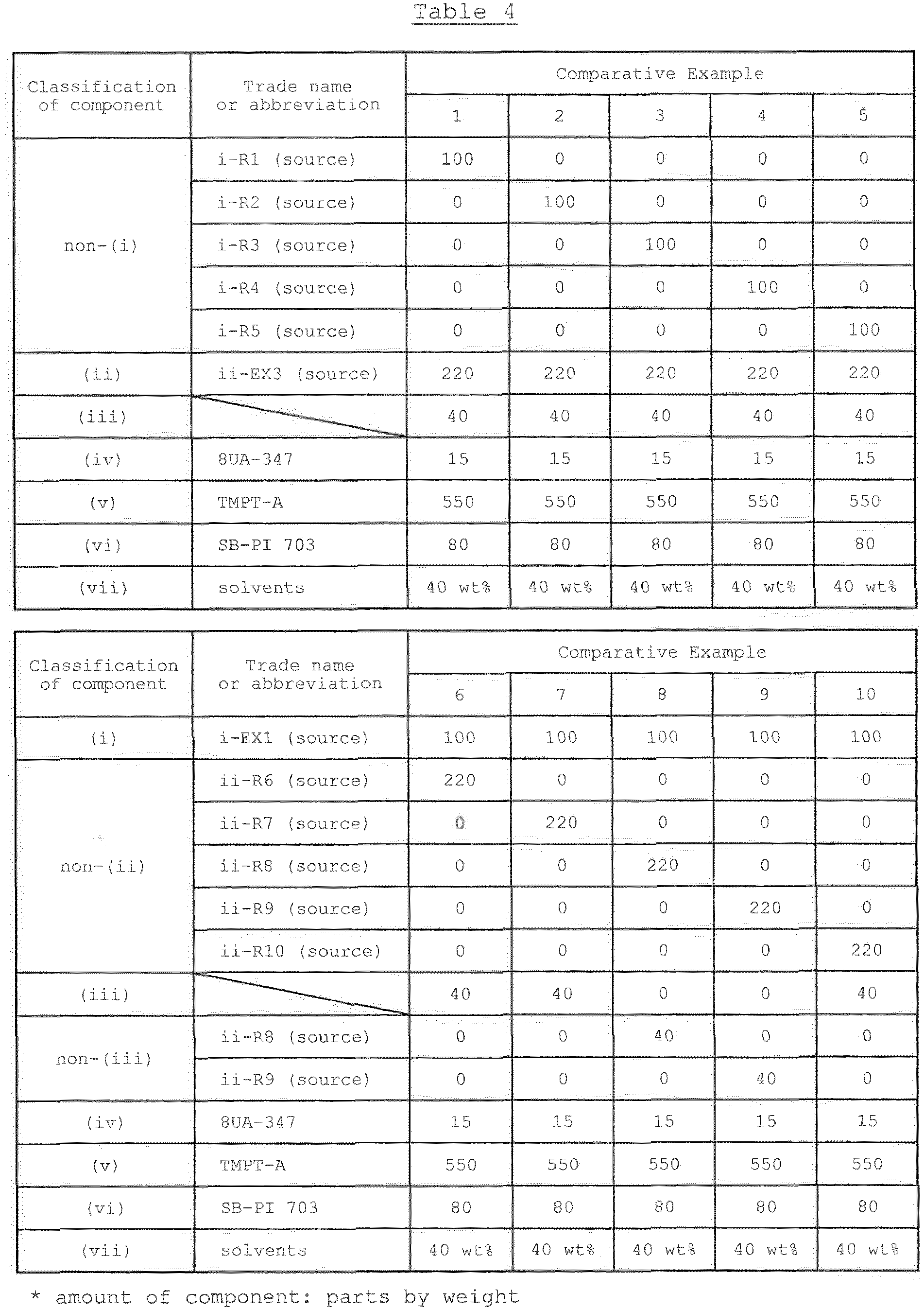

### Comparative Example 11

In a brown plastic bottle, 250 parts of i-EX1, 380 parts of ii-EX3, 50 parts of Akurit 8UA-347, 550 parts of trimethylolpropane triacrylate (TMPT-A), and 80 parts of 2-hydroxy-2-methyl-1-phenylpropan-1-one (SB-PI 703) were metered. An amount of cyclopentanol was added so that the resulting composition might have a solid concentration of 40 wt%. The contents were shaken and agitated. This composition was equivalent to the following formulation in weight ratio of components (i) through (vi) calculated as solids.

| | |
|---|---|
| (i) | 100 parts |
| (ii) | 90 parts |
| (iii) | 16 parts |
| (iv) | 15 parts |
| (v) | 550 parts |
| (vi) | 80 parts |

The formulation is also tabulated in Table 5.

### Comparative Example 12

As in Comparative Example 11, components were blended so as to meet the formulation of Comparative Example 12 in Table 5.

### Comparative Example 13

As in Comparative Example 11, components were blended so as to meet the formulation of Comparative Example 13 in Table 5.

### Comparative Example 14

As in Comparative Example 11, components were blended so as to meet the formulation of Comparative Example 14 in Table 5.

### Comparative Example 15

As in Comparative Example 11, components were blended so as to meet the formulation of Comparative Example 15 in Table 5.

### Comparative Example 16

As in Comparative Example 11, components were blended so as to meet the formulation of Comparative Example 16 in Table 5.

### Comparative Example 17

As in Comparative Example 11, components were blended so as to meet the formulation of Comparative Example 17 in Table 5.

### Comparative Example 18

As in Comparative Example 11, components were blended so as to meet the formulation of Comparative Example 18 in Table 5.

### Comparative Example 19

Components were blended as in Example 1 aside from omitting component (vi).

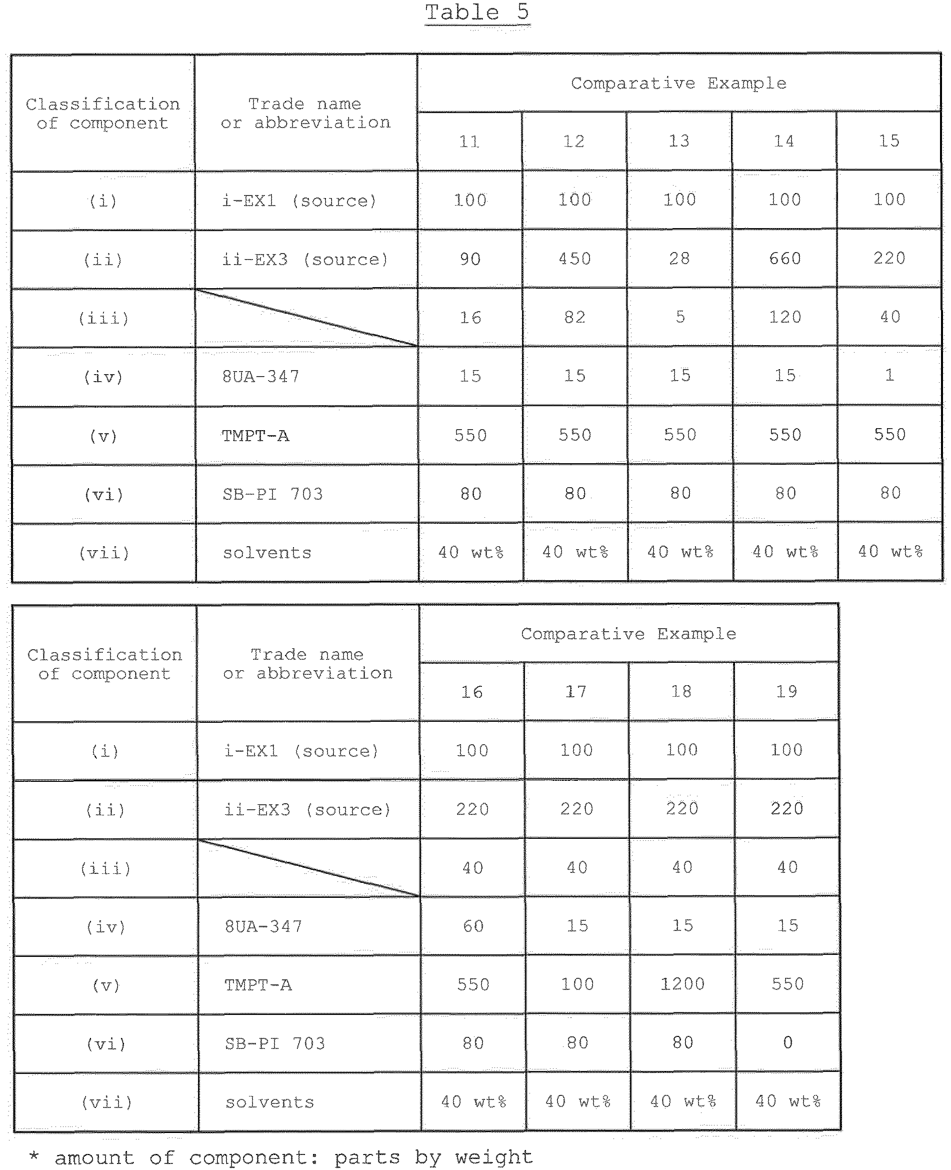

### COATED ARTICLES

### Example 12

The composition of Example 1 was flow coated onto a polycarbonate resin substrate of 5 mm thick. The substrate was held stationary for 5 minutes at an inclination angle of about 70° relative to the vertical, with the coated surface upside. The coated substrate was heated at 80°C for 5 minutes while it was rested horizontal. After heating, the substrate was placed in a belt conveyor type UV application system model ECS-401XN2 (Eye Graphics Co., Ltd.) where it was exposed to UV in a dose of 600 mJ/cm² for curing the coating. The coated article was evaluated for transparency, mar resistance, adhesion, boiling adhesion, and weather resistance by the following tests.

### Transparency or haze (Hz)

A haze (Hz) was measured by a haze meter NDH2000 (Nippon Denshoku Industries Co., Ltd.). The sample was rated transparent (⊚) for Hz ≤ 1, good (○) for Hz ≤ 2, and poor (×) for Hz > 2.

### Mar resistance (ΔHz)

Mar resistance was analyzed according to ASTM D1044 by mounting a Taber abrasion tester with wheels CS-10F, measuring a haze after 500 rounds under a load of 500 g by a haze meter NDH5000SP (Nippon Denshoku Industries Co., Ltd.), and calculating a haze difference (ΔHz) before and after the test. The sample was rated very good (⊚) for ΔHz ≤ 5, good (○) for ΔHz ≤ 10, and poor (x) for ΔHz > 10.

### Adhesion

Initial adhesion was analyzed by a cross-hatch adhesion test according to JIS K5400, specifically by scribing the coating with a razor along 6 longitudinal and 6 transverse lines at a spacing of 2 mm to define 25 square sections, tightly attaching adhesive tape Cellotape® (Nichiban Co., Ltd.) thereto, rapidly pulling back the adhesive tape at an angle of 90°, and counting the number (X) of coating sections kept unpeeled. The sample was rated good (○) for X=25 and poor (×) for X < 25.

### Boiling adhesion

The coated article was immersed in boiling water at 100°C for 2 hours before it was examined by the same cross-hatch adhesion test as the initial adhesion. The sample was rated good (○) for X=25 and poor (x) for X < 25.

### Weather resistance

The coated article was evaluated for weather resistance, using EYE Super UV tester W-151 (Iwasaki Electric Co., Ltd.). The test conditions included UV light with intensity 1×10³ W/m², an environment at temperature 60°C and humidity 50% RH, and an accumulative UV energy quantity of 300 MJ/m². The sample was observed for appearance change. The sample was rejected (x) when cracks, coating peel, whitening or yellowing was detected and passed (○) when no defects were detected.

### Examples 13 to 22

Using the compositions of Examples 2 to 11, the same procedure as in Example 12 was repeated. The test results are shown in Table 6.

### Comparative Examples 20 to 38

Using the compositions of Comparative Examples 1 to 19, the same procedure as in Example 12 was repeated. The test results are shown in Table 7.

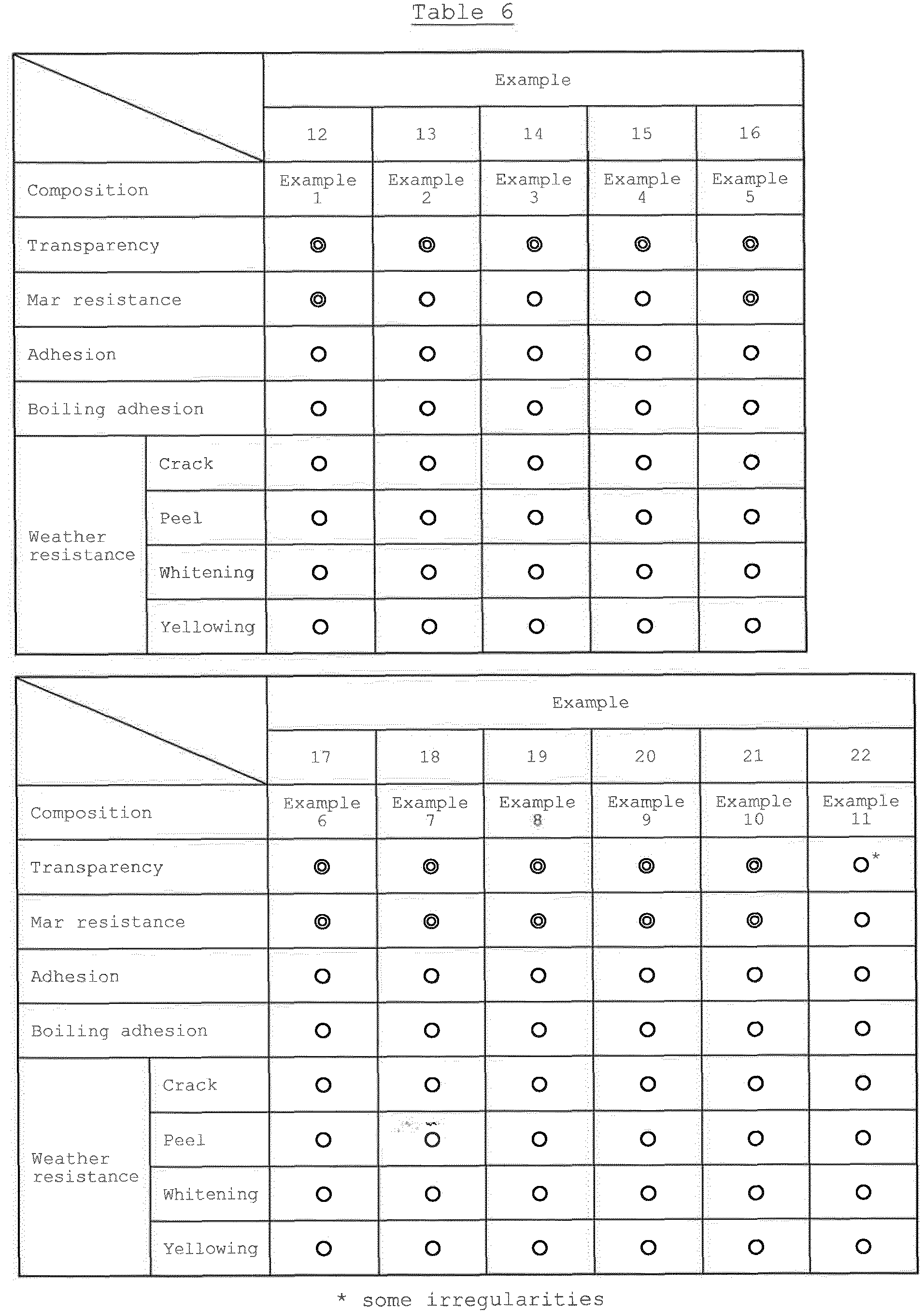

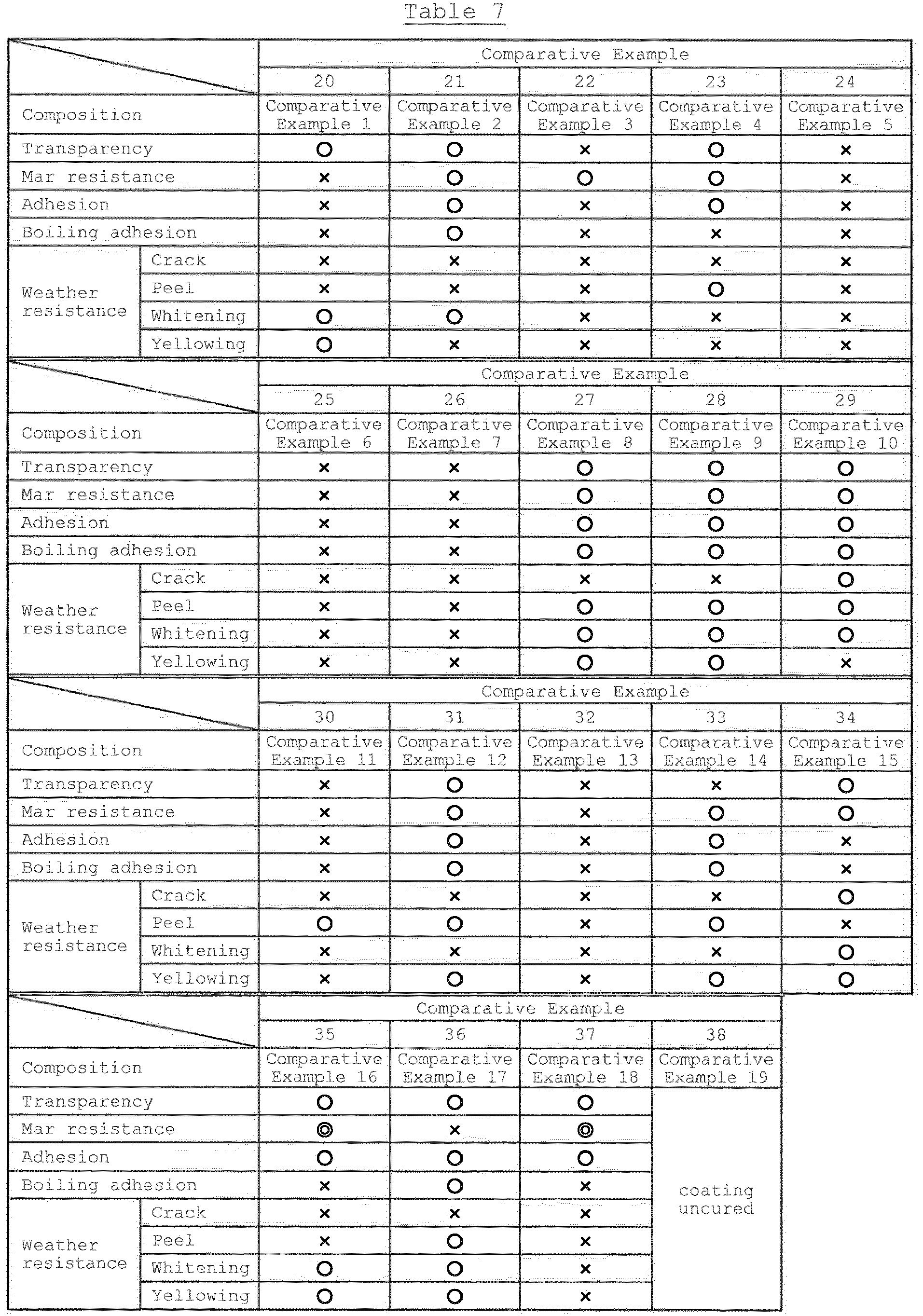

### Receptivity to inorganic evaporated layer

### Example 23

Whether or not the coated article had a possibility to receive an inorganic evaporated layer was examined by the procedure of J. Am. Chem. Soc., 2006, 128, pp11018. In a vacuum induced by an RF coil, oxygen, argon and tetraethoxysilane (trade name KBE-04 by Shin-Etsu Chemical Co., Ltd.) as reactant gases were fed to generate a plasma, whereby an inorganic evaporated layer composed mainly of silicon oxide was deposited on a strip of the coated article (Examples 12 to 22). Surface modification was analyzed by IR spectroscopy. It was found that the inorganic evaporated layer was tenaciously bonded to the coated article.

Examples and Comparative Examples are interpreted as follows. Examples 1 and 2 illustrate standard compositions of the invention. The coated articles (Examples 12 and 13) using these compositions are curable with UV and their film physical properties are satisfactory. Examples 3 to 10 demonstrate that the composition of the invention is not limited to Examples 1 and 2, and various modifications may be made thereto. The corresponding coated articles (Examples 14 to 21) also exhibit satisfactory physical properties.

Example 11 is a composition containing sol-gel silica with a D₅₀ of 110 nm. The corresponding coated article (Example 22) is satisfactory in all the tests, but some irregularities are found on the coating.

Comparative Examples 1 to 5 are compositions in which the main structure of component (i) is changed to fall outside the scope of the invention. The corresponding coated articles (Comparative Examples 20 to 24) exhibit more or less coating defects. These results are in stark contrast to Example 10 in which the main structure of component (i) is changed from Example 1, but within the scope of the invention.

Comparative Examples 6 to 10 are compositions in which component (ii) or (iii) is changed to fall outside the scope of the invention. The corresponding coated articles (Comparative Examples 25 to 29) exhibit more or less coating defects.

Comparative Examples 11 to 19 are compositions in which the amount of a certain component is changed to fall outside the scope of the invention. The corresponding coated articles (Comparative Examples 30 to 38) exhibit more or less coating defects.

Example 23 demonstrates a possibility to receive an inorganic evaporated layer. The method of depositing an inorganic evaporated layer is not limited to Example 23. The coated article of the invention is attested to have high affinity to an inorganic evaporated layer.

### INDUSTRIAL APPLICABILITY

The resin composition of the invention is useful in forming a weather resistant laminate. The weather resistant laminate finds use not only as automotive headlamp covers, but also as protective film on outdoor LC displays, building material for carports and sunroofs, transportation vehicle parts (e.g., motorcycle windshields, bullet-train windows, construction heavy machine windows), automotive glazing, CVD primers, protective film on light-collecting mirrors for solar panels.

## Claims

1. An actinic energy radiation-curable acrylic silicone resin composition comprising
(i) vinyl base polymer having the general formula (I):
poly-[(A)ₐ-co-(B)_{b}-co-(C)_{c}] (I)
wherein each of A, B and C is a vinyl base monomer unit, the bracket and -co- indicate a random copolymer and a, b and c are indicative of molar fractions,
A is a vinyl base monomer having alkoxysilyl group and a is a number such that monomer A accounts for 1 to 50% by weight of the entire polymer,
B is a UV-absorbing vinyl base monomer, other than A, and b is a number such that monomer B accounts for 5 to 40% by weight of the entire polymer,
C is vinyl base monomer other than, and copolymerizable with, the vinyl base monomers A and B, and c is a number such that monomer C accounts for {100-(monomer A content)-(monomer B content)}% by weight of the entire polymer;
(ii) hydrolytic condensate obtainable from (co)hydrolytic condensation of at least one selected from alkoxysilanes and partial hydrolysates thereof, the alkoxysilanes having the general formula (II):
R¹ₘR²ₙSi(OR³)₄₋ₘ₋ₙ (II)
wherein R¹ and R² are each independently hydrogen or a monovalent C₁-C₂₀ hydrocarbon group which may be unsubstituted or have a vinyl polymerizable group, two or more groups of R¹ and R² may bond together, R³ is C₁-C₃ alkyl and m and n each are 0 or 1, m+n is 0, 1 or 2;
(iii) core/shell type tetragonal titanium oxide solid-solution microparticles each consisting of a core of tetragonal titanium oxide having tin and manganese incorporated in solid solution and a shell of silicon oxide around the core, wherein the cores have a volume basis 50% cumulative distribution diameter of up to 30 nm, the core/shell type microparticles have a volume basis 50% cumulative distribution diameter of up to 50 nm, as measured by the dynamic light scattering method, the amount of tin incorporated in solid solution is such as to provide a molar ratio of titanium to tin (Ti/Sn) of 10/1 to 1,000/1, and the amount of manganese incorporated in solid solution is such as to provide a molar ratio of titanium to manganese (Ti/Mn) of 10/1 to 1,000/1;
(iv) polycarbonate and/or polyester-based urethane-modified vinyl polymer free of alkoxysilyl, or excluding component (i);
(v) vinyl polymerizable monomer free of alkoxysilyl;
(vi) photopolymerization initiator, and
(vii) solvent,
said composition comprising 100 parts by weight of component (i), 100 to 400 parts by weight of component (ii), 10 to 100 parts by weight of component (iii), 5 to 50 parts by weight of component (iv), and 200 to 1,000 parts by weight of component (v).

2. An acrylic silicone resin composition of claim 1, comprising (viii) microparticles of at least one inorganic oxide selected from the group consisting of silicon oxide, cerium oxide and zinc oxide.

3. An acrylic silicone resin composition of claim 2 wherein the microparticles of inorganic oxide (viii) have a volume basis 50% cumulative distribution diameter of up to 100 nm, as measured by the dynamic light scattering method.

4. An acrylic silicone resin composition of any one of claims 1 to 3, comprising (ix) a UV absorber and/or UV stabilizer.

5. An acrylic silicone resin composition of any one of the preceding claims in which in the vinyl base polymer (i) the molar fractions a, b, c are such that, by weight based on the entire weight of the vinyl base polymer, monomer units A account for 5 to 35%, monomer units B account for 8 to 25% and monomer units C account for 35 to 90%.

6. An acrylic silicone resin composition of any one of the preceding claims in which vinyl base monomer B carries a UV absorbing group selected from organic groups having a benzotriazole, benzophenone, resorcinol or triazine group.

7. An acrylic silicone resin composition of any one of claims 1 to 4 wherein the UV-absorbing vinyl base monomer B constituting the vinyl base polymer (i) is a benzotriazole compound having the general formula (III): 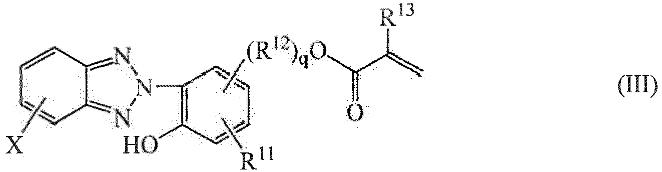 wherein X is hydrogen or chlorine, R¹¹ is hydrogen, methyl or C₄-C₈ tertiary alkyl, R¹² is straight or branched C₂-C₁₀ alkylene, R¹³ is hydrogen or methyl, and q is 0 or 1, or a benzophenone compound having the general formula (IV): 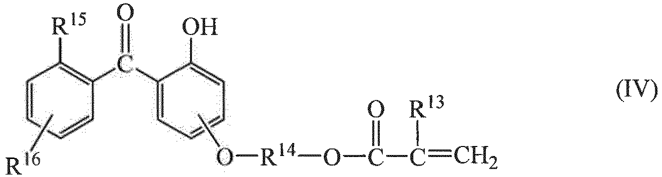 wherein R¹³ is as defined above, R¹⁴ is a substituted or unsubstituted, straight or branched C₂-C₁₀ alkylene, R¹⁵ is hydrogen or hydroxyl, and R¹⁶ is hydrogen, hydroxyl, or C₁-C₆ alkoxy.

8. An acrylic silicone resin composition of any one of the preceding claims in which vinyl base monomer C is one or more selected from (meth)acrylic monomers having a cyclic hindered amine structure, (meth)acrylates, (meth)acrylonitriles, (meth)acrylamides, alkyl vinyl ethers, alkyl vinyl esters, styrene, and derivatives thereof.

9. An acrylic silicone resin composition of any one of the preceding claims in which vinyl base monomer C is one or more selected from methyl (meth)acrylate, ethyl (meth)acrylate, isopropyl (meth)acrylate, n-butyl (meth)acrylate, isobutyl (meth)acrylate, n-hexyl (meth)acrylate, 2-ethylhexyl (meth)acrylate, isononyl (meth)acrylate, lauryl (meth)acrylate, cyclohexyl (meth)acrylate, 4-methylcyclohexyl (meth)acrylate, 4-tert-butylcyclohexyl (meth)acrylate, isobornyl (meth)acrylate, dicyclopentanyl (meth)acrylate and dicyclopentenyloxyethyl (meth)acrylate.

10. An acrylic silicone resin composition of any one of the preceding claims wherein the hydrolytic condensate (ii) is obtainable from cohydrolytic condensation of a mixture of
the alkoxysilane having formula (II) and/or partial hydrolysate thereof, and
a silyl-modified benzophenone compound having the general formula (V) and/or partial hydrolysate thereof: 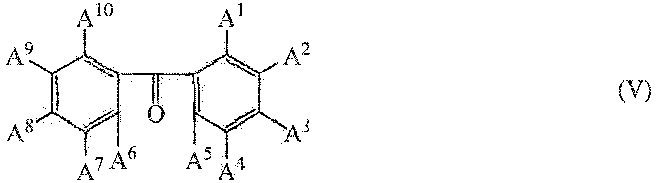 wherein A¹ to A¹⁰ are each independently hydrogen, hydroxyl, C₁-C₅ alkyl or a group of the formula (VI), at least one hydroxyl group and at least one group of formula (VI) being included in formula (V), 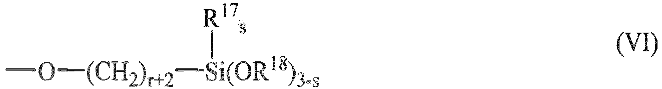 wherein R¹⁷ and R¹⁸ are each independently C₁-C₅ alkyl, r is an integer of 1 to 5, and s is an integer of 0 to 2.

11. An acrylic silicone resin composition of any one of the preceding claims wherein the hydrolytic condensate (ii) is a cohydrolytic condensate of silanes of formula (II) consisting of tetraalkoxysilane (ii-Q), trialkoxysilane (ii-T) and dialkoxysilane (ii-D), and wherein
tetraalkoxysilane (ii-Q) is used in an amount of 30 to 80% by weight based on the total weight of silanes used,
trialkoxysilane (ii-T) is used in an amount of 20 to 60% based on the total weight of silanes used, and
dialkoxysilane (ii-D) is used in an amount of 0 to 20% based on the total weight of silanes used.

12. An acrylic silicone resin composition of claim 11 wherein any one of the silanes (ii-Q), (ii-T) and (ii-D) has a vinyl polymerizable group.

13. An acrylic silicone resin composition of any one of the preceding claims in which the vinyl polymer (iv) is a vinyl-based polymer having as side chain a polycarbonate or polyester-based urethane, obtainable from reaction of aliphatic polycarbonate diol or aliphatic polyester diol with aromatic diisocyanate.

14. An acrylic silicone resin composition of any one of the preceding claims in which the vinyl monomer (v) consists of or comprises one or more selected from (meth)acrylic esters of (meth)acrylic acid with alcohols, which may be polyhydric alcohols.

15. An acrylic silicone resin composition of claim 14 in which the vinyl monomer (v) comprises polyfunctional ester selected from glycerol triacrylate, trimethylolpropane triacrylate, pentaerythritol triacrylate, dipentaerythritol triacrylate, ethoxylated isocyanuric acid triacrylate, ethoxylated glycerol triacrylate, ethoxylated trimethylolpropane triacrylate, pentaerythritol tetraacrylate, dipentaerythritol hexaacrylate, ditrimethylolpropane tetraacrylate, ethoxylated pentaerythritol tetraacrylate, trimethylolpropane trimethacrylate and trispentaerythritol octaacrylate.

16. An acrylic silicone resin composition of any one of the preceding claims wherein the solvent (vii) is present in such an amount that the acrylic silicone resin composition has solids concentration of 5 to 70% by weight.

17. A method for preparing an acrylic silicone resin composition of any one of claims 1 to 16, comprising the steps of:
feeding a dispersion of component (iii) and/or (viii) to a system containing the alkoxysilane having formula (II) and/or partial hydrolysate thereof,
effecting (co)hydrolytic condensation in the system, whereby the hydrolytic condensate as component (ii) is obtained as a composite product of component (ii) with component (iii) and/or (viii), and
mixing the product with the remaining components of the composition.

18. A coated article comprising an organic resin substrate and an acrylic silicone resin composition of any one of claims 1 to 16 which is directly coated and cured onto at least one surface of the substrate, or which is coated and cured onto at least one surface of the substrate via another organic resin layer.

19. A coated article of claim 18 wherein the organic resin substrate is polycarbonate.

20. A method for manufacturing a coated article, such as a coated article of claim 18 or 19, comprising the steps of:
(a) coating at least one surface of a substrate with an acrylic silicone resin composition of any one of claims 1 to 16 to form a wet coated article,
(b) heat treating the wet coated article, and
(c) irradiating the heat treated article with actinic-energy radiation to cure the composition to form the coated article.

## Patentansprüche

1. Mit aktinischer Strahlung härtbare Acrylsilikonharz-Zusammensetzung, die Folgendes umfasst:
(i) Polymer auf Vinylbasis, das die allgemeine Formel (I) aufweist:
poly-[(A)ₐ-co-(B)_{b}-co-(C)_{c}] (I)
worin A, B und C jeweils eine Monomereinheit auf Vinylbasis sind, die Klammer und -co- ein statistisches Copolymer anzeigen und a, b und c molare Anteile angeben, worin
A ein Monomer auf Vinylbasis ist, das eine Alkoxysilylgruppe aufweist, und a eine solche Zahl ist, dass Monomer A 1 bis 50 Gew.-% des gesamten Polymers ausmacht,
B ein UV-absorbierendes Monomer auf Vinylbasis ist, das ungleich A ist, und b eine solche Zahl ist, dass Monomer B 5 bis 40 Gew.-% des gesamten Polymers ausmacht,
C ein Monomer auf Vinylbasis ist, das ungleich den Monomeren auf Vinylbasis A und B und damit copolymerisierbar ist, und c eine solche Zahl ist, dass Monomer C {100-(Gehalt an Monomer A)-(Gehalt an Monomer B)} Gew.-% des gesamten Polymers ausmacht;
(ii) hydrolytisches Kondensat, das durch die (co)hydrolytische Kondensation von zumindest einem, ausgewählt aus Alkoxysilanen und partiellen Hydrolysaten davon, erhältlich ist, wobei die Alkoxysilane die allgemeine Formel (II) aufweisen:
R¹ₘR²ₙSi(OR³)₄₋ₘ₋ₙ (II)
worin R¹ und R² jeweils unabhängig Wasserstoff oder eine einwertige C₁-C₂₀-Kohlenwasserstoffgruppe sind, die unsubstituiert sein oder eine polymerisierbare Vinylgruppe aufweisen kann, wobei gegebenenfalls zwei oder mehr Gruppen von R¹ und R² verbunden sind, R³ C₁-C₃-Alkyl ist und m und n jeweils 0 oder 1 sind, wobei m+n = 0, 1 oder 2 ist;
(iii) Mikropartikel vom Kern/Hülle-Typ aus tetragonalem Titanoxid als feste Lösung, die jeweils aus einem Kern aus tetragonalem Titanoxid, worin Zinn und Mangan in fester Lösung enthalten sind, und einer Hülle aus Siliciumoxid um den Kern herum bestehen, wobei die Kerne einen 50%-Durchmesser auf Volumenbasis der Verteilungsfunktion von bis zu 30 nm aufweisen und die Mikropartikel vom Kern/Hülle-Typ einen 50%-Durchmesser auf Volumenbasis der Verteilungsfunktion von bis zu 50 nm aufweisen, gemessen mittels des dynamischen Lichtstreuungsverfahrens, das in der festen Lösung enthaltene Zinn in einer solchen Menge vorliegt, dass ein Molverhältnis zwischen Titan und Zinn (Ti/Sn) von 10/1 bis 1.000/1 erhalten wird, und das in der festen Lösung enthaltene Mangan in einer solchen Menge vorliegt, dass ein Molverhältnis zwischen Titan und Mangan (Ti/Mn) von 10/1 bis 1.000/1 erhalten wird;
(iv) Polycarbonat und/oder polyesterbasiertes Urethan-modifiziertes Vinylpolymer, frei von Alkoxysilyl oder ohne Komponente (i);
(v) polymerisierbares Vinylmonomer, frei von Alkoxysilyl;
(vi) Photopolymerisationsinitiator; und
(vii) Lösungsmittel;
wobei die Zusammensetzung 100 Gewichtsteile von Komponente (i), 100 bis 400 Gewichtsteile von Komponente (ii), 10 bis 100 Gewichtsteile von Komponente (iii), 5 bis 50 Gewichtsteile von Komponente (iv) und 200 bis 1.000 Gewichtsteile von Komponente (v) umfasst.

2. Acrylsilikonharz-Zusammensetzung nach Anspruch 1, die (viii) Mikropartikel aus zumindest einem anorganischen Oxid umfasst, das aus der aus Siliciumoxid, Ceroxid und Zinkoxid bestehenden Gruppe ausgewählt ist.

3. Acrylsilikonharz-Zusammensetzung nach Anspruch 2, wobei die Mikropartikel aus anorganischem Oxid (viii), gemessen mittels des dynamischen Lichtstreuungsverfahrens, einen 50%-Durchmesser auf Volumenbasis der Verteilungsfunktion von bis zu 100 nm aufweisen.

4. Acrylsilikonharz-Zusammensetzung nach einem der Ansprüche 1 bis 3, die (ix) ein UV-Absorptionsmittel und/oder einen UV-Stabilisator umfasst.

5. Acrylsilikonharz-Zusammensetzung nach einem der vorangegangenen Ansprüche, wobei die Molanteile a, b und c im Polymer auf Vinylbasis (i), bezogen auf das Gesamtgewicht des Polymers auf Vinylbasis so sind, dass die Monomereinheiten A 5 bis 35 Gew.-%, die Monomereinheiten B 8 bis 25 Gew.-% und die Monomereinheiten C 35 bis 90 Gew.-% ausmachen.

6. Acrylsilikonharz-Zusammensetzung nach einem der vorangegangenen Ansprüche, wobei das Monomer B auf Vinylbasis eine UV-absorbierende Gruppe trägt, die aus organischen Gruppen mit einer Benzotriazol-, Benzophenon-, Resorcin- oder Triazingruppe ausgewählt ist.

7. Acrylsilikonharz-Zusammensetzung nach einem der Ansprüche 1 bis 4, wobei das UV-absorbierende Monomer B auf Vinylbasis, welches das Polymer auf Vinylbasis (i) darstellt, eine Benzotriazolverbindung der allgemeinen Formel (III): 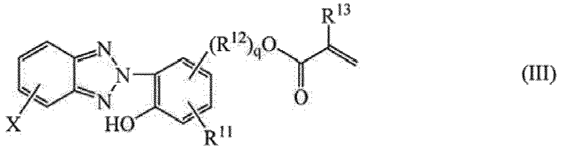 worin X Wasserstoff oder Chlor ist, R¹¹ Wasserstoff, Methyl oder tertiäres C₄-C₈-Alkyl ist, R¹² unverzweigtes oder verzweigtes C₂-C₁₀-Alkylen ist, R¹³ Wasserstoff oder Methyl ist und q = 0 oder 1 ist, oder eine Benzophenonverbindung der allgemeinen Formel (IV) ist: 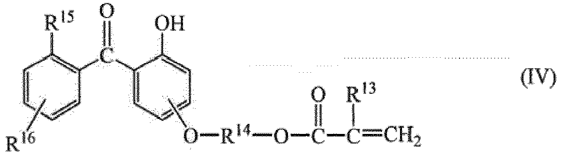 worin R¹³ wie vorstehend definiert ist, R¹⁴ substituiertes oder unsubstituiertes, unverzweigtes oder verzweigtes C₂-C₁₀-Alkylen ist, R¹⁵ Wasserstoff oder Hydroxyl ist und R¹⁶ Wasserstoff, Hydroxyl oder C₁-C₆-Alkoxy ist.

8. Acrylsilikonharz-Zusammensetzung nach einem der vorangegangenen Ansprüche, wobei das Monomer C auf Vinylbasis eines oder mehrere, ausgewählt aus (Meth)acrylmonomeren mit einer sterisch gehinderten zyklischen Aminstruktur, (Meth)acrylaten, (Meth)acrylnitrilen, (Meth)acrylamiden, Alkylvinylethern, Alkylvinylestern, Styrol und Derivaten davon sind.

9. Acrylsilikonharz-Zusammensetzung nach einem der vorangegangenen Ansprüche, wobei das Monomer C auf Vinylbasis eines oder mehrere, ausgewählt aus Methyl(meth)-acrylat, Ethyl(meth)acrylat, Isopropyl(meth)acrylat, n-Butyl(meth)acrylat, Isobutyl(meth)-acrylat, n-Hexyl(meth)acrylat, 2-Ethylhexyl(meth)acrylat, Isononyl(meth)acrylat, Lauryl-(meth)acrylat, Cyclohexyl(meth)acrylat, 4-Methylcyclohexyl(meth)acrylat, 4-tert-Butylcyclohexyl(meth)acrylat, Isobornyl(meth)acrylat, Dicyclopentanyl(meth)acrylat und Dicyclopentenyloxyethyl(meth)acrylat ausgewählt sind.

10. Acrylsilikonharz-Zusammensetzung nach einem der vorangegangenen Ansprüche, wobei das hydrolytische Kondensat (ii) durch cohydrolytische Kondensation eines Gemischs aus dem Alkoxysilan der Formel (II) und/oder einem partiellen Hydrolysat davon und einer Silyl-modifizierten Benzophenonverbindung der allgemeinen Formel (V) und/oder einem partiellen Hydrolysat davon erhältlich ist: 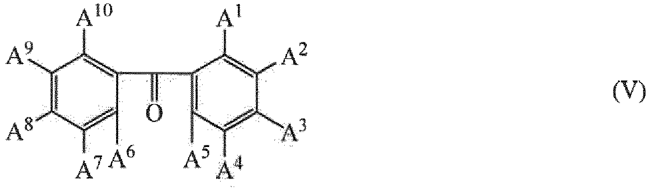 worin A¹ bis A¹⁰ jeweils unabhängig Wasserstoff, Hydroxyl, C₁-C₅-Alkyl oder eine Gruppe der Formel (VI) sind, wobei zumindest eine Hydroxylgruppe und zumindest eine Gruppe der Formel (VI) von Formel (V) umfasst sind, 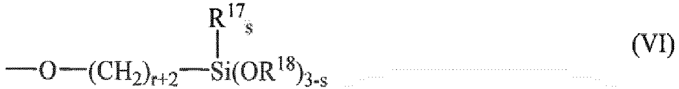 worin R¹⁷ und R¹⁸ jeweils unabhängig C₁-C₅-Alkyl sind, r eine ganze Zahl von 1 bis 5 ist und s eine ganze Zahl von 0 bis 2 ist.

11. Acrylsilikonharz-Zusammensetzung nach einem der vorangegangenen Ansprüche, wobei das hydrolytische Kondensat (ii) ein cohydrolytisches Kondensat aus Silanen der Formel (II) ist, die aus Tetraalkoxysilan (ii-Q), Trialkoxysilan (ii-T) und Dialkoxysilan (ii-D) bestehen, wobei
Tetraalkoxysilan (ii-Q) in einer Menge von 30 bis 80 Gew.-%, bezogen auf das Gesamtgewicht der eingesetzten Silane, eingesetzt wird,
Trialkoxysilan (ii-T) in einer Menge von 20 bis 60 Gew.-%, bezogen auf das Gesamtgewicht der eingesetzten Silane, eingesetzt wird und
Dialkoxysilan (ii-D) in einer Menge von 0 bis 20 Gew.-%, bezogen auf das Gesamtgewicht der eingesetzten Silane, eingesetzt wird.

12. Acrylsilikonharz-Zusammensetzung nach Anspruch 11, wobei ein beliebiges der Silane (ii-Q), (ii-T) und (ii-D) eine polymerisierbare Vinylgruppe aufweist.

13. Acrylsilikonharz-Zusammensetzung nach einem der vorangegangenen Ansprüche, wobei das Vinylpolymer (iv) ein Polymer auf Vinylbasis ist, das als Seitenkette ein Polycarbonat oder ein polyesterbasiertes Urethan aufweist und durch Reaktion von aliphatischem Polycarbonatdiol oder aliphatischem Polyesterdiol mit aromatischem Diisocyanat erhältlich ist.

14. Acrylsilikonharz-Zusammensetzung nach einem der vorangegangenen Ansprüche, wobei das Vinylmonomer (v) eines oder mehrere, ausgewählt aus (Meth)acrylestern von (Meth)acrylsäure mit Alkoholen, die gegebenenfalls mehrwertige Alkohole sind, sind oder daraus besteht.

15. Acrylsilikonharz-Zusammensetzung nach Anspruch 14, wobei das Vinylmonomer (V) polyfunktionellen Ester umfasst, der aus Glycerintriacrylat, Trimethylolpropantriacrylat, Pentaerythrittriacrylat, Dipentaerythrittriacrylat, ethoxyliertem Isocyanursäuretriacrylat, ethoxyliertem Glycerintriacrylat, ethoxyliertem Trimethylolpropantriacrylat, Pentaerythrittetraacrylat, Dipentaerythrithexaacrylat, Ditrimethylolpropantetraacrylat, ethoxyliertem Pentaerythrittetraacrylat, Trimethylolpropantrimethacrylat und Trispentaerythritoctaacrylat ausgewählt ist.

16. Acrylsilikonharz-Zusammensetzung nach einem der vorangegangenen Ansprüche, wobei das Lösungsmittel (vii) in einer solchen Menge vorliegt, dass die Acrylsilikonharz-Zusammensetzung eine Feststoffkonzentration von 5 bis 70 Gew.-% aufweist.

17. Verfahren zur Herstellung einer Acrylsilikonharz-Zusammensetzung nach einem der Ansprüche 1 bis 16, das folgende Schritte umfasst:
das Zuführen einer Dispersion von Komponente (iii) und/oder (viii) zu einem System, welches das Alkoxysilan der Formel (II) und/oder ein partielles Hydrolysat davon umfasst,
das Durchführen von (co)hydrolytischer Kondensation in dem System, wodurch das hydrolytische Kondensat als Komponente (ii) als Verbundprodukt von Komponente (ii) mit Komponente (iii) und/oder (viii) erhalten wird, und
das Vermischen des Produkts mit den restlichen Komponenten der Zusammensetzung.

18. Beschichteter Gegenstand, der ein organisches Harzsubstrat und eine Acrylsilikonharz-Zusammensetzung nach einem der Ansprüche 1 bis 16 umfasst, die direkt auf zumindest eine Oberfläche des Substrats aufgetragen und gehärtet ist oder die über eine andere organische Harzschicht auf zumindest einer Oberfläche des Substrats aufgetragen und gehärtet ist.

19. Beschichteter Gegenstand nach Anspruch 18, wobei das organische Harzsubstrat Polycarbonat ist.

20. Verfahren zur Herstellung eines beschichteten Gegenstands, wie z. B. eines beschichteten Gegenstands nach Anspruch 18 oder 19, das folgende Schritte umfasst:
(a) das Beschichten zumindest einer Oberfläche eines Substrats mit einer Acrylsilikonharz-Zusammensetzung nach einem der Ansprüche 1 bis 16, um einen nassbeschichteten Gegenstand zu erzeugen,
(b) das Wärmebehandeln des nassbeschichteten Gegenstands und
(c) das Bestrahlen des wärmebehandelten Gegenstands mit aktinischer Strahlung zur Härtung der Zusammensetzung, um den beschichteten Gegenstand zu erzeugen.

## Revendications

1. Composition de résine siliconée acrylique durcissable par un rayonnement énergétique actinique, comprenant
(i) un polymère à base de vinyle de formule générale (I) :
poly-[(A)ₐ-co-(B)_{b}-co-(C)_{c}] (I)
dans laquelle chacun de A, B et C est un motif monomère à base de vinyle, le crochet et -co- indiquent un copolymère statistique et a, b et c indiquent les fractions molaires,
A est un monomère à base de vinyle ayant un groupe alcoxysilyle et a est un nombre tel que le monomère A représente 1 à 50 % en poids de tout le polymère,
B est un monomère à base de vinyle absorbant les UV, autre que A, et b est un nombre tel que le monomère B représente 5 à 40 % en poids de tout le polymère,
C est un monomère de vinyle autre que, et copolymérisable avec, les monomères à base de vinyle A et B, et c est un nombre tel que le monomère C représente {100 - (teneur en monomère A) - (teneur en monomère B)} % en poids de tout le polymère ;
(ii) un condensat hydrolytique pouvant être obtenu par condensation (co)hydrolytique d'au moins l'un choisi parmi les alcoxysilanes et leurs hydrolysats partiels, les alcoxysilanes répondant à la formule générale (II) :
R¹ₘR²ₙSi(OR³)₄₋ₘ₋ₙ (II)
dans laquelle chacun de R¹ et R² est indépendamment un hydrogène ou un groupe hydrocarboné monovalent en C₁ à C₂₀ qui peut être non substitué ou qui peut avoir un groupe vinyle polymérisable, deux ou plus de deux groupes R¹ et R² peuvent être liés ensemble, R³ est un alkyle en C₁ à C₃ et chacun de m et n vaut 0 ou 1, m+n vaut 0, 1 ou 2 ;
(iii) des microparticules en solution solide d'oxyde de titane tétragonal du type cœur/gaine constituées chacune d'un cœur d'oxyde de titane tétragonal ayant de l'étain et du manganèse incorporés en solution solide et une gaine d'oxyde de silicium autour du cœur, dans lesquelles les cœurs ont un diamètre en distribution cumulée à 50 % en volume allant jusqu'à 30 nm, les microparticules de type cœur/gaine ont un diamètre en distribution cumulée à 50 % en volume allant jusqu'à 50 nm, tel que mesuré par un procédé de diffusion dynamique de la lumière, la quantité d'étain incorporé en solution solide est telle qu'elle assure un rapport molaire du titane à l'étain (Ti/Sn) de 10/1 à 1000/1, et la quantité de manganèse incorporé en solution solide est telle qu'elle assure un rapport molaire du titane au manganèse (Ti/Mn) de 10/1 à 1000/1 ;
(iv) un polymère de vinyle à modification uréthane à base de polyester et/ou de polycarbonate exempt d'alcoxysilyle, ou excluant le composant (i) ;
(v) un monomère de vinyle polymérisable exempt d'alcoxysilyle ;
(vi) un amorceur de polymérisation ; et
(vii) un solvant ;
ladite composition comprenant 100 parties en poids de composant (i), 100 à 400 parties en poids de composant (ii), 10 à 100 parties en poids de composant (iii), 5 à 50 parties en poids de composant (iv), et 200 à 1000 parties en poids de composant (v).

2. Composition de résine siliconée acrylique selon la revendication 1, comprenant (viii) des microparticules d'au moins un oxyde inorganique choisi dans l'ensemble constitué par l'oxyde de silicium, l'oxyde de cérium et l'oxyde de zinc.

3. Composition de résine siliconée acrylique selon la revendication 2, dans laquelle les microparticules d'oxyde inorganique (viii) ont un diamètre en distribution cumulée à 50 % en volume allant jusqu'à 100 nm, tel que mesuré par le procédé de diffusion dynamique de la lumière.

4. Composition de résine siliconée acrylique selon l'une quelconque des revendications 1 à 3, comprenant (ix) un absorbeur UV et/ou un stabilisant UV.

5. Composition de résine siliconée acrylique selon l'une quelconque des revendications précédentes, dans laquelle, dans le polymère à base de vinyle (i), les fractions molaires a, b et c sont telles que, en poids par rapport au poids total du polymère à base de vinyle, les motifs monomères A représentent 5 à 35 %, les motifs monomères B représentent 8 à 25 % et les motifs monomères C représentent 35 à 90 %.

6. Composition de résine siliconée acrylique selon l'une quelconque des revendications précédentes, dans laquelle le monomère à base de vinyle B porte un groupe absorbant les UV choisi parmi les groupes organiques ayant un groupe benzotriazole, benzophénone, résorcinol ou triazine.

7. Composition de résine siliconée acrylique selon l'une quelconque des revendications 1 à 4, dans laquelle le monomère à base de vinyle absorbant les UV B constituant le polymère à base de vinyle (i) est un composé benzotriazole de formule générale (III) : 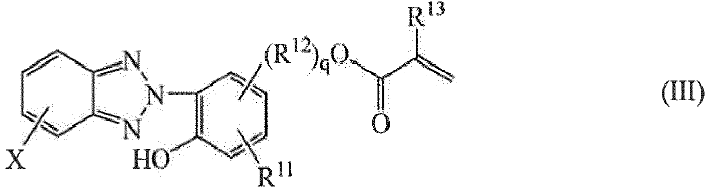 dans laquelle X est l'hydrogène ou le chlore, R¹¹ est l'hydrogène, méthyle ou un alkyle tertiaire en C₄ à C₈, R¹² est un alkylène en C₂ à C₁₀ linéaire ou ramifié, R¹³ est l'hydrogène ou méthyle, et q vaut 0 ou 1,
ou un composé benzophénone de formule générale (IV) : 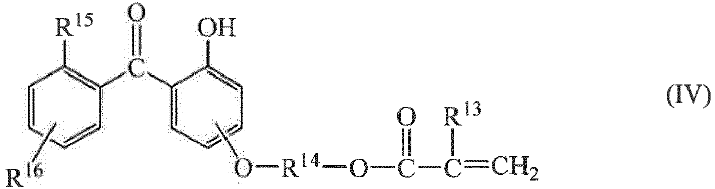 dans laquelle R¹³ est tel que défini ci-dessus, R¹⁴ est un alkylène en C₂ à C₁₀ linéaire ou ramifié, substitué ou non substitué, R¹⁵ est l'hydrogène ou hydroxyle, et R¹⁶ est l'hydrogène, hydroxyle, ou un alcoxy en C₁ à C₆.

8. Composition de résine siliconée acrylique selon l'une quelconque des revendications précédentes, dans laquelle le monomère à base de vinyle C est un ou plusieurs choisi parmi les monomères (méth)acryliques ayant une structure d'amine encombrée cyclique, les (méth)acrylates, les (méth)acrylonitriles, les (méth)acrylamides, les alkylvinyléthers, les alkylvinylesters, le styrène, et leurs dérivés.

9. Composition de résine siliconée acrylique selon l'une quelconque des revendications précédentes, dans laquelle le monomère à base de vinyle C est un ou plusieurs choisis parmi le (méth)acrylate de méthyle, le (méth)acrylate d'éthyle, le (méth)acrylate d'isopropyle, le (méth)acrylate de n-butyle, le (méth)acrylate d'isobutyle, le (méth)acrylate de n-hexyle, le (méth)acrylate de 2-éthylhexyle, le (méth)acrylate d'isononyle, le (méth)acrylate de lauryle, le (méth)acrylate de cyclohexyle, le (méth)acrylate de 4-méthylcyclohexyle, le (méth)acrylate de 4-tert-butylcyclohexyle, le (méth)acrylate d'isobornyle, le (méth)acrylate de dicyclopentanyle et le (méth)acrylate de dicyclopentényloxyéthyle.

10. Composition de résine siliconée acrylique selon l'une quelconque des revendications précédentes, dans laquelle le condensat hydrolytique (ii) peut être obtenu par condensation cohydrolytique d'un mélange
de l'alcoxysilane de formule (II) et/ou d'un hydrolysat partiel de celui-ci, et
d'un composé benzophénone à modification silyle de formule générale (V) et/ou d'un hydrolysat partiel de celui-ci : 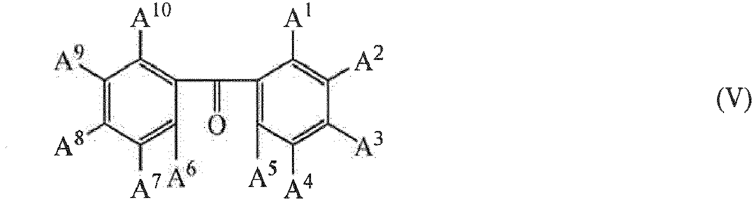 dans laquelle chacun de A¹ à A¹⁰ est indépendamment l'hydrogène, hydroxyle, un alkyle en C₁ à C₅ ou un groupe de formule (VI), au moins un groupe hydroxyle et au moins un groupe de formule (VI) étant inclus dans la formule (V), 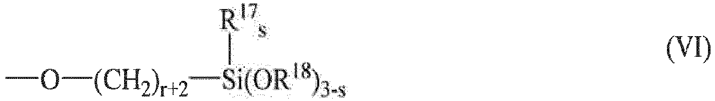 dans laquelle chacun de R¹⁷ et R¹⁸ est indépendamment un alkyle en C₁ à C₅, r est un entier de 1 à 5, et s est un entier de 0 à 2.

11. Composition de résine siliconée acrylique selon l'une quelconque des revendications précédentes, dans laquelle le condensat hydrolytique (ii) est un condensat cohydrolytique de silanes de formule (II) consistant en tétraalcoxysilane (ii-Q), trialcoxysilane (ii-T) et dialcoxysilane (ii-D), et dans laquelle
le tétraalcoxysilane (ii-Q) est utilisé en une quantité de 30 à 80 % en poids par rapport au poids total des silanes utilisés,
le trialcoxysilane (ii-T) est utilisé en une quantité de 20 à 60 % par rapport en poids total des silanes utilisés, et le dialcoxysilane (ii-D) est utilisé en une quantité de 0 à 20 % par rapport au poids total des silanes utilisés.

12. Composition de résine siliconée acrylique selon la revendication 11, dans laquelle l'un quelconque des silanes (ii-Q), (ii-T) et (ii-D) a un groupe vinyle polymérisable.

13. Composition de résine siliconée acrylique selon l'une quelconque des revendications précédentes, dans laquelle le polymère de vinyle (iv) est un polymère à base de vinyle ayant, en tant que chaîne latérale, un uréthane à base de polycarbonate ou de polyester, pouvant être obtenu par réaction d'un polycarbonate diol aliphatique ou d'un polyester diol aliphatique avec un diisocyanate aromatique.

14. Composition de résine siliconée acrylique selon l'une quelconque des revendications précédentes, dans laquelle le monomère de vinyle (v) consiste en ou comprend un ou plusieurs choisis parmi les esters (méth)acrylates d'acide (méth)acrylique avec des alcools, qui peuvent être des alcools polyvalents.

15. Composition de résine siliconée acrylique selon la revendication 14, dans laquelle le monomère de vinyle (v) comprend un ester polyfonctionnel choisi parmi le triacrylate de glycérol, le triacrylate de triméthylolpropane, le triacrylate de pentaérythritol, le triacrylate de dipentaérythritol, le triacrylate d'acide isocyanurique éthoxylé, le triacrylate de glycérol éthoxylé, le triacrylate de triméthylolpropane éthoxylé, le tétraacrylate de pentaérythritol, l'hexaacrylate de dipentaérythritol, le tétraacrylate de ditriméthylolpropane, le tétraacrylate de pentaérythritol éthoxylé, le triméthacrylate de triméthylolpropane et l'octaacrylate de trispentaérythritol.

16. Composition de résine siliconée acrylique selon l'une quelconque des revendications précédentes, dans laquelle le solvant (vii) est présent en une quantité telle que la composition de résine siliconée acrylique ait une concentration de solides de 5 à 70 % en poids.

17. Procédé pour préparer une composition de résine siliconée acrylique de l'une quelconque des revendications 1 à 16, comprenant les étapes suivantes :
introduction d'une dispersion de composants (iii) et/ou (viii) dans un système contenant l'alcoxysilane de formule (II) et/ou un hydrolysat partiel de celui-ci,
mise en œuvre d'une condensation (co)hydrolytique dans le système, moyennant quoi le condensat hydrolytique servant de composant (ii) est obtenu sous la forme d'un produit composite du composant (ii) avec les composants (iii) et/ou (viii), et
mélange du produit avec les composants restants de la composition.

18. Article revêtu comprenant un substrat en résine organique et une composition de résine siliconée acrylique de l'une quelconque des revendications 1 à 16 qui est directement déposée sous forme de revêtement et durcie sur au moins une surface du substrat, ou qui est déposée sous forme de revêtement et durcie sur au moins une surface du substrat via une autre couche de résine organique.

19. Article revêtu selon la revendication 18, dans lequel le substrat de résine organique est un polycarbonate.

20. Procédé pour fabriquer un article revêtu, tel qu'un article revêtu de la revendication 18 ou 19, comprenant les étapes suivantes :
(a) revêtement d'au moins une surface d'un substrat avec une composition de résine siliconée acrylique de l'une quelconque des revendications 1 à 16 pour former un article revêtu humide,
(b) traitement à la chaleur de l'article revêtu humide, et
(c) irradiation de l'article traité à la chaleur avec un rayonnement énergétique actinique pour durcir la composition pour former l'article revêtu.
